(19) **Europäisches Patentamt / European Patent Office / Office européen des brevets**

(11) **EP 4 422 218 A1**

(12) **EUROPEAN PATENT APPLICATION**
published in accordance with Art. 153(4) EPC

(43) Date of publication:
**28.08.2024 Bulletin 2024/35**

(21) Application number: **22897500.9**

(22) Date of filing: **24.10.2022**

(51) International Patent Classification (IPC):
**H04W 4/02** *(2018.01)*  **H04B 7/0413** *(2017.01)*

(52) Cooperative Patent Classification (CPC):
**H04B 7/0413; H04W 4/02; H04W 24/02;**
**Y02D 30/70**

(86) International application number:
**PCT/CN2022/127117**

(87) International publication number:
**WO 2023/093417 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **23.11.2021 CN 202111396726**

(71) Applicant: **Huawei Technologies Co., Ltd.**
**Shenzhen, Guangdong 518129 (CN)**

(72) Inventors:
• **NI, Rui**
 **Shenzhen, Guangdong 518129 (CN)**
• **YANG, Ganghua**
 **Shenzhen, Guangdong 518129 (CN)**
• **ZHU, Qian**
 **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

(54) **COMMUNICATION METHOD AND APPARATUS, AND COMPUTER-READABLE STORAGE MEDIUM**

(57) Embodiments of the present invention disclose a communication method and apparatus, and a computer-readable storage medium. The method includes: An environment controller sends location information and a state pattern to a control board via an access network device. The control board adjusts a location and a state of the control board based on the location information and the state pattern. In embodiments of the present invention, a propagation environment of surrounding space may be optimized by adjusting the location and the state of the control board, to improve a throughput of a communication system.

FIG. 3

**Description**

This application claims priority to Chinese Patent Application No. 202111396726.8, filed with the China National Intellectual Property Administration on November 23, 2021 and entitled "COMMUNICATION METHOD AND APPARATUS, AND COMPUTER-READABLE STORAGE MEDIUM", which is incorporated herein by reference in its entirety.

**TECHNICAL FIELD**

The present invention relates to the field of communication technologies, and in particular, to a communication method and apparatus, and a computer-readable storage medium.

**BACKGROUND**

A reconfigurable intelligent surface (reconfigurable intelligent surface, RIS) technology is a reconfigurable antenna technology that may be used to change a dielectric constant of a material surface unit. In the RIS technology, controlling an electromagnetic wave in a space dimension may be implemented based on switching control between different states, that is, controlling a direction, an amplitude, a phase, and the like of the electromagnetic wave is performed by changing the dielectric constant of the material surface unit. A wireless power transfer (wireless power transfer, WPT) technology is a wireless technology used to implement contactless energy transfer and charging through electromagnetic waves. A smart radio environment (smart radio environment, SRE) is a radio electromagnetic wave propagation environment (channel) that is manually controlled by using technologies such as RIS and WPT. The SRE technology can alleviate impact caused by multipath propagation, Doppler spread, and the like on a conventional radio channel, to improve throughput performance of a wireless communication system.

However, in a process of implementing SRE by using RIS, channel state information (channel state information, CSI) between a terminal device and RIS and CSI between RIS and an access network device need to be measured. System overheads required for measuring the CSI between the terminal device and RIS and the CSI between RIS and the access network device are high, thereby reducing a throughput of the communication system. Therefore, how to improve the throughput of the communication system is very important.

**SUMMARY**

Embodiments of the present invention disclose a communication method and apparatus, and a computer-readable storage medium, to improve a throughput of a communication system.

According to a first aspect, a communication method is disclosed. The communication method may be applied to a control board, or may be applied to a module (for example, a chip) in the control board. An example in which the communication method is applied to the control board is used below for description. The communication method may include:

receiving location information from an access network device, where the location information includes rotation information and/or movement information;
adjusting a location of the control board based on the location information;
receiving a state pattern from the access network device; and
adjusting a state of the control board based on the state pattern.

In this embodiment of the present invention, the control board may receive the location information and the state pattern from the access network device. Then, the control board may adjust the location of the control board based on the location information, and may adjust the state of the control board based on the state pattern, to optimize a propagation environment of surrounding space of the control board, improve average transmission quality between a terminal device and the access network device, and improve a throughput of a communication system.

In a possible implementation, the adjusting a location of the control board based on the location information includes:
adjusting a spatial direction of the control board based on the rotation information, and/or adjusting a spatial location of the control board based on the movement information.

In this embodiment of the present invention, the control board may receive the rotation information and/or the movement information from the access network device, and then the control board may adjust the spatial direction (angle) of the control board based on the rotation information, and/or adjust the spatial location of the control board based on the movement information, to optimize a propagation environment of surrounding space of the control board.

In a possible implementation, the rotation information includes a rotation direction and a rotation angle, and the adjusting a location of the control board based on the location information includes:
adjusting the spatial direction of the control board based on the rotation direction and the rotation angle.

In this embodiment of the present invention, the control board may receive the rotation information from the access network device, and then the control board may adjust the spatial direction of the control board based on the rotation direction and the rotation angle, to optimize a propagation environment of surrounding space of the control board.

In a possible implementation, the rotation information includes a rotation angle, and the adjusting a location of the control board based on the location information includes:
adjusting the spatial direction of the control board based on the rotation angle.

In this embodiment of the present invention, the control board may pre-specify a rotation direction. After receiving the rotation information from the access network device, the control board may adjust the spatial direction (angle) of the control board based on the rotation angle and the specified rotation direction, to optimize a propagation environment of surrounding space of the control board.

In a possible implementation, the movement information includes a movement direction and a movement distance, and the adjusting a location of the control board based on the location information includes: adjusting the spatial location of the control board based on the movement direction and the movement distance.

In this embodiment of the present invention, the control board may receive the movement information from the access network device, and then the control board may adjust the spatial location of the control board based on the movement direction and the movement distance, to optimize a propagation environment of surrounding space of the control board.

In a possible implementation, the movement information includes a movement distance, and the adjusting a location of the control board based on the location information includes: adjusting the spatial location of the control board based on the movement distance.

In this embodiment of the present invention, the control board may pre-specify a movement direction. After receiving the movement information from the access network device, the control board may adjust the spatial location of the control board based on the movement distance and the specified movement direction, to optimize a propagation environment of surrounding space of the control board.

In a possible implementation, the method may further include:
sending an energy storage value and absorption efficiency to the access network device.

In this embodiment of the present invention, the control board may directly send the energy storage value and the absorption efficiency to the access network device, or may send the energy storage value and the absorption efficiency to the access network device at a fixed period, so that the access network device can obtain the energy storage value and the absorption efficiency of the control board.

In a possible implementation, the method may further include:
receiving a first request from the access network device, where the first request is used to request the energy storage value and the absorption efficiency.

In this embodiment of the present invention, the control board may receive the first request from the access network device, and then the control board may send the energy storage value and the absorption efficiency to the access network device, so that the access network device can obtain the energy storage value and the absorption efficiency of the control board. Because the control board may send the energy storage value and the absorption efficiency to the access network only when receiving the first request, a quantity of times of sending the energy storage value and the absorption efficiency may be reduced, to reduce average power consumption of the control board.

According to a second aspect, a communication method is disclosed. The communication method may be applied to an access network device, or may be applied to a module (for example, a chip) in the access network device. An example in which the communication method is applied to the access network device is used below for description. The communication method may include:

> receiving location information of a control board from an environment controller, where the location information includes rotation information and/or movement information;
> sending the location information to the control board;
> receiving a state pattern of the control board from the environment controller, where the state pattern includes state information, and a state corresponding to the state information is an absorbing and energy-storing state, an active forwarding state, or a passive forwarding state; and
> sending the state pattern to the control board.

In this embodiment of the present invention, the access network device may receive the location information and the state pattern of the control board from the environment controller, and then the access network device may send the location information and the state pattern to the control board, so that the control board can adjust a location of the control board based on the location information, and can adjust a state of the control board based on the state pattern, to optimize a propagation environment of surrounding space of the control board, improve average transmission quality between a terminal device and the access network device, and improve a throughput of a communication system.

In a possible implementation, the rotation information includes a rotation direction and a rotation angle.

In this embodiment of the present invention, the rotation information sent by the access network device to the control board may include the rotation direction and the rotation angle, so that after the control board receives the rotation information, the control board can adjust a spatial direction of the control board based on the rotation direction and the rotation angle.

In a possible implementation, the rotation information includes a rotation angle.

In a possible implementation, the movement information includes a movement direction and a movement distance.

In this embodiment of the present invention, the movement information sent by the access network device to the control board may include the movement direction and the movement distance, so that after the control board receives the movement information, the control board can adjust a spatial location of the control board based on the movement direction and the movement distance.

In a possible implementation, the movement information includes a movement distance.

In a possible implementation, the method may further include:
sending an energy storage value and absorption efficiency of the control board to the environment controller.

In this embodiment of the present invention, the access network device may directly send the energy storage value and the absorption efficiency of the control board to the environment controller, or may send the energy storage value and the absorption efficiency of the control board to the environment controller at a fixed period, so that the environment controller can obtain the energy storage value and the absorption efficiency of the control board.

In a possible implementation, the method may further include:
receiving a second request from the environment controller, where the second request is used to obtain the energy storage value and the absorption efficiency of the control board.

In this embodiment of the present invention, the access network device may receive the second request from the environment controller, and then the access network device may send the energy storage value and the absorption efficiency of the control board to the environment controller, so that the environment controller can obtain the energy storage value and the absorption efficiency of the control board. Because the access network device may send the energy storage value and the absorption efficiency of the control board to the environment controller only when receiving the second request, a quantity of times of sending the energy storage value and the absorption efficiency of the control board may be reduced, to reduce average power consumption of the access network device.

In a possible implementation, the method may further include:
receiving the energy storage value and the absorption efficiency from the control board.

In this embodiment of the present invention, the access network device may first receive the energy storage value and the absorption efficiency from the control board, and then the access network device may send the energy storage value and the absorption efficiency of the control board to the environment controller, so that the environment controller can use the energy storage value and the absorption efficiency of the control board.

In a possible implementation, the method may further include:
sending a first request to the control board, where the first request is used to request the energy storage value and the absorption efficiency of the control board.

In this embodiment of the present invention, the access network device may send the first request to the control board to obtain the energy storage value and the absorption efficiency of the control board. It can be learned that, because the control board may send the energy storage value and the absorption efficiency to the access network device only when receiving the first request, a quantity of times of sending the energy storage value and the absorption efficiency may be reduced, to reduce average power consumption of the control board.

In a possible implementation, the method may further include:

determining channel quality of a terminal device based on a three-dimensional spatial map, and the location information and the state pattern of the control board, where the three-dimensional spatial map includes building structure information, location information and material information of a stationary device, communication service model information of the stationary device, and deployment information of the access network device;
allocating a resource to the terminal device based on the channel quality; and
sending information about the resource to the terminal device.

In this embodiment of the present invention, the access network device may determine the channel quality of the terminal device based on the three-dimensional spatial map, and the location information and the state pattern of the control board, the access network device may allocate the resource to the terminal device based on the channel quality, and then the access network device may send the information about the resource to the terminal device, to indicate the terminal device to send data on a corresponding resource. Good channel quality leads to a low bit error rate, and poor channel quality leads to a high bit error rate. Therefore, the access network device may allocate a large quantity of resources to a terminal device with good channel quality, so that an average bit error rate of a communication system can be reduced, and resource utilization of the communication system can be improved. In addition, the access network device can further reduce interference between different users by allocating the resource to the terminal device based on the channel quality.

In a possible implementation, the method may further include:

determining the channel quality of the terminal device based on the three-dimensional spatial map, and the location information and the state pattern of the control board;
determining transmit power based on the channel quality; and
sending the transmit power to the terminal device.

In this embodiment of the present invention, the access network device may determine the channel quality of the terminal device based on the three-dimensional spatial map, and the location information and the state pattern of the control board, the access network device may determine the transmit power of the terminal device based on the channel quality, and then the access network device may send the transmit power to the terminal device. It can be learned that, the access network device may determine appropriate transmit power for the terminal device based on the channel quality, so that excessively low transmit power of the terminal device can be avoided, to improve a signal-to-noise ratio of the terminal device, and reduce a bit error rate. In addition, excessively high transmit power of the terminal device can be avoided, to reduce average power consumption of the terminal device, increase battery use duration of the terminal device, and reduce interference to another terminal device.

In a possible implementation, the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

In this embodiment of the present invention, the access network device may send the state pattern to the control board, so that the control board can adjust a state of the control board, and the control board can be switched between three states: the absorbing and energy-storing state, the active forwarding state, and the passive forwarding state. When the control board is in the absorbing and energy-storing state, the control board may use a circuit of the control board to absorb energy from an electromagnetic wave in a surrounding environment, convert the energy into electric energy, and store the electric energy in a local battery. When the control board is in the active forwarding state, the control board may use energy of the local battery of the control board to amplify the incident electromagnetic wave, and then reflect or transmit the amplified electromagnetic wave. When the control board is in the passive forwarding state, the control board may directly reflect or transmit the incident electromagnetic wave without performing any processing. It can be learned that, the control board is controlled to be switched between the absorbing and energy-storing state, the active forwarding state, and the passive forwarding state, so that energy stored by the control board in the absorbing and energy-storing state can be used in the active forwarding state, and incident electromagnetic waves of the access network device and the terminal device can be amplified, to improve signal-to-noise ratios of the access network device and the terminal device.

According to a third aspect, a communication method is disclosed. The communication method may be applied to an environment controller, or may be applied to a module (for example, a chip) in the environment controller. An example in which the communication method is applied to the environment controller is used below for description. The communication method may include:

sending location information of a control board to an access network device, where the location information includes rotation information and/or movement information; and
sending a state pattern of the control board to the access network device, where the state pattern includes state information, and a state corresponding to the state information is an absorbing and energy-storing state, an active forwarding state, or a passive forwarding state.

In this embodiment of the present invention, the environment controller may send the location information and the state pattern of the control board to the access network device, and then the access network device sends the location information and the state pattern of the control board to the control board, so that the control board can adjust a location of the control board based on the location information, and can adjust a state of the control board based on the state pattern, to optimize a propagation environment of surrounding space of the control board, improve average transmission quality between a terminal device and the access network device, and improve a throughput of a communication system.

In a possible implementation, the method may further include:
determining the location information of the control board.

In this embodiment of the present invention, the environment controller may first determine the location information of the control board, so that the environment controller can send the location information to the control board via the access network device.

In a possible implementation, the determining the location information of the control board includes:
determining the location information of the control board based on a three-dimensional spatial map, where the three-dimensional spatial map includes building structure information, location information and material information of a stationary device, communication service model information of the stationary device, and deployment information of the access network device.

In this embodiment of the present invention, the environment controller may determine location information of an optimal deployment location of the control board based on the building structure information, the location information and the material information of the stationary device, the communication service model information of the stationary device, and the deployment information of the access network device, and then send the location information to the control board via the access network device, so that the control board can adjust a location of the control board based on the location information, to optimize a propagation environment of surrounding space of the control board, and improve a throughput of a communication system.

In a possible implementation, the determining the location information of the control board includes:
determining the location information of the control board based on a three-dimensional spatial map, and an energy storage value and absorption efficiency of the control board, where the three-dimensional spatial map includes building structure information, location information and material information of a stationary device, communication service model information of the stationary device, and deployment information of the access network device.

In this embodiment of the present invention, the environment controller may determine location information of an optimal deployment location of the control board based on the three-dimensional spatial map, and the energy storage value and the absorption efficiency of the control board, and then send the location information to the control board via the access network device, so that the control board can adjust a location of the control board based on the location information, to optimize a propagation environment of surrounding space of the control board. In addition, because the environment controller considers the energy storage value and the absorption efficiency of the control board when determining the location information, the environment controller may determine a location that facilitates the control board to absorb electromagnetic wave energy from a surrounding environment, to improve absorption and energy storage efficiency of the control board.

In a possible implementation, the method may further include:
receiving the energy storage value and the absorption efficiency of the control board from the access network device.

In this embodiment of the present invention, the environment controller may first receive the energy storage value and the absorption efficiency from the access network device, so that the environment controller can determine the location information of the control board by using the energy storage value and the absorption efficiency of the control board.

In a possible implementation, the method may further include:
sending a second request to the access network device, where the second request is used to obtain the energy storage value and the absorption efficiency of the control board.

In this embodiment of the present invention, the environment controller may send the second request to the access network device, and then the environment controller may receive the energy storage value and the absorption efficiency of the control board from the access network device. It can be learned that, the environment controller may quickly and conveniently obtain the energy storage value and the absorption efficiency of the control board by sending the second request to the access network device. In addition, the access network device may send the energy storage value and the absorption efficiency to the environment controller only when receiving the second request, so that a quantity of times of sending the energy storage value and the absorption efficiency can be reduced, to reduce average power consumption of the access network device.

In a possible implementation, the method may further include:
determining the state pattern of the control board.

In this embodiment of the present invention, the environment controller may first determine the state pattern of the control board, so that the environment controller can send the state pattern to the control board via the access network device.

In a possible implementation, the determining the state pattern of the control board includes:
determining the state pattern of the control board based on the three-dimensional spatial map and the location information of the control board.

In this embodiment of the present invention, the environment controller may determine an optimal state pattern of the control board based on the three-dimensional spatial map and the location information of the control board, and then send the state pattern to the control board via the access network device, so that the control board can adjust a state of the control board based on the state pattern, to optimize a propagation environment of surrounding space of the control board.

In a possible implementation, the determining the state pattern of the control board includes: determining the state pattern of the control board based on the three-dimensional spatial map, the location information of the control board, and the energy storage value and the absorption efficiency of the control board.

In this embodiment of the present invention, the environment controller may determine an optimal state pattern of the control board based on the three-dimensional spatial map, the location information of the control board, and the energy storage value and the absorption efficiency of the control board, and then send the state pattern to the control board via the access network device, so that the control board can adjust a state of the control board based on the state pattern, to optimize a propagation environment of surrounding space of the control board. In addition, because the environment controller considers the energy storage value and the absorption efficiency of the control board when determining the state pattern, a case in which the energy storage value of the control board is 0 when the control board adjusts the state of the control board to the active forwarding state based on the state pattern can be avoided, to successfully improve a signal-to-noise ratio of the terminal device.

In a possible implementation, the rotation information includes a rotation direction and a rotation angle.

In this embodiment of the present invention, the rotation information sent by the environment controller to the control board via the access network device may include the rotation direction and the rotation angle, so that the control board can adjust a spatial direction of the control board based on the rotation direction and the rotation angle, to optimize a propagation environment of surrounding space of the control board.

In a possible implementation, the rotation information includes a rotation angle.

In a possible implementation, the movement information includes a movement direction and a movement distance.

In this embodiment of the present invention, the movement information sent by the environment controller to the control board via the access network device may include the movement direction and the movement distance, so that the control board can adjust a spatial location of the control board based on the movement direction and the movement distance, to optimize a propagation environment of surrounding space of the control board.

In a possible implementation, the movement information includes a movement distance.

In a possible implementation, the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

In this embodiment of the present invention, the environment controller may send the state pattern to the access network device, and then the access network device may send the state pattern to the control board, so that the control board can adjust a state of the control board, and the control board can be switched between three states: the absorbing and energy-storing state, the active forwarding state, and the passive forwarding state. When the control board is in the absorbing and energy-storing state, the control board may use a circuit of the control board to absorb energy from an electromagnetic wave in a surrounding environment, convert the energy into electric energy, and store the electric energy in a local battery. When the control board is in the active forwarding state, the control board may use energy of the local battery of the control board to amplify the incident electromagnetic wave, and then reflect or transmit the amplified electromagnetic wave. When the control board is in the passive forwarding state, the control board may directly reflect or transmit the incident electromagnetic wave without performing any processing. It can be learned that, the control board is controlled to be switched between the absorbing and energy-storing state, the active forwarding state, and the passive forwarding state, so that energy stored by the control board in the absorbing and energy-storing state can be used in the active forwarding state, and incident electromagnetic waves of the access network device and the terminal device can be amplified, to improve signal-to-noise ratios of the access network device and the terminal device.

According to a fourth aspect, a communication apparatus is disclosed. The communication apparatus may be a control board or a module (for example, a chip) in the control board. The communication apparatus may include:

a receiving unit, configured to receive location information from an access network device, where the location information includes rotation information and/or movement information; and
an adjustment unit, configured to adjust a location of the control board based on the location information, where the receiving unit is further configured to receive a state pattern from the access network device; and
the adjustment unit is further configured to adjust a state of the control board based on the state pattern.

In a possible implementation, that the adjustment unit adjusts a location of the control board based on the location information includes:
adjusting a spatial direction of the control board based on the rotation information, and/or adjusting a spatial location of the control board based on the movement information.

In a possible implementation, the rotation information includes a rotation direction and a rotation angle, and that the adjustment unit adjusts a location of the control board based on the location information includes:
adjusting the spatial direction of the control board based on the rotation direction and the rotation angle.

In a possible implementation, the rotation information includes a rotation angle, and that the adjustment unit adjusts a location of the control board based on the location information includes:
adjusting the spatial direction of the control board based on the rotation angle.

In a possible implementation, the movement information includes a movement direction and a movement distance, and that the adjustment unit adjusts a location of the control board based on the location information includes:
adjusting the spatial location of the control board based on the movement direction and the movement distance.

In a possible implementation, the movement information includes a movement distance, and that the adjustment unit adjusts a location of the control board based on the location information includes:
adjusting the spatial location of the control board based on the movement distance.

In a possible implementation, the apparatus may further include:
a sending unit, configured to send an energy storage value and absorption efficiency to the access network device.

In a possible implementation, the receiving unit is further configured to receive a first request from the access network device, where the first request is used to request the energy storage value and the absorption efficiency.

According to a fifth aspect, a communication apparatus is disclosed. The communication apparatus may be an access network device or a module (for example, a chip) in the access network device. The communication apparatus may include:

a receiving unit, configured to receive location information of a control board from an environment controller, where the location information includes rotation information and/or movement information; and
a sending unit, configured to send the location information to the control board, where
the receiving unit is further configured to receive a state pattern of the control board from the environment controller, where the state pattern includes state information, and a state corresponding to the state information is an absorbing and energy-storing state, an active forwarding state, or a passive forwarding state; and
the sending unit is further configured to send the state pattern to the control board.

In a possible implementation, the rotation information includes a rotation direction and a rotation angle.

In a possible implementation, the movement information includes a movement direction and a movement distance.

In a possible implementation, the sending unit is further configured to send an energy storage value and absorption efficiency of the control board to the environment controller.

In a possible implementation, the receiving unit is further configured to receive a second request from the environment controller, where the second request is used to obtain the energy storage value and the absorption efficiency of the control board.

In a possible implementation, the receiving unit is further configured to receive the energy storage value and the absorption efficiency from the control board.

In a possible implementation, the sending unit is further configured to send a first request to the control board, where the first request is used to request the energy storage value and the absorption efficiency of the control board.

In a possible implementation, the communication apparatus may further include:

a determining unit, configured to determine channel quality of a terminal device based on a three-dimensional spatial map, and the location information and the state pattern of the control board, where the three-dimensional spatial map includes building structure information, location information and material information of a stationary device, communication service model information of the stationary device, and deployment information of the access network device; and
an allocation unit, configured to allocate a resource to the terminal device based on the channel quality, where
the sending unit is further configured to send information about the resource to the terminal device.

In a possible implementation, the determining unit is further configured to determine the channel quality of the terminal device based on the three-dimensional spatial map, and the location information and the state pattern of the control board;

the determining unit is further configured to determine transmit power based on the channel quality; and
the sending unit is further configured to send the transmit power to the terminal device.

In a possible implementation, the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

According to a sixth aspect, a communication apparatus is disclosed. The communication apparatus may be an environment controller or a module (for example, a chip) in the environment controller. The communication apparatus may include:

a sending unit, configured to send location information of a control board to an access network device, where the location information includes rotation information and/or movement information, where
the sending unit is further configured to send a state pattern of the control board to the access network device, where the state pattern includes state information, and a state corresponding to the state information is an absorbing and energy-storing state, an active forwarding state, or a passive forwarding state.

In a possible implementation, the rotation information includes a rotation direction and a rotation angle.

In a possible implementation, the movement information includes a movement direction and a movement distance.

In a possible implementation, the communication apparatus may further include:
a determining unit, configured to determine the location information of the control board.

In a possible implementation, that the determining unit determines the location information of the control board includes: determining the location information of the control board based on a three-dimensional spatial map, where the three-dimensional spatial map includes building structure information, location information and material information of a stationary device, communication service model information of the stationary device, and deployment information of the access network device.

In a possible implementation, that the determining unit determines the location information of the control board includes: determining the location information of the control board based on a three-dimensional spatial map, and an energy storage value and absorption efficiency of the control board, where the three-dimensional spatial map includes building structure information, location information and material information of a stationary device, communication service model information of the stationary device, and deployment information of the access network device.

In a possible implementation, the communication apparatus may further include:
a receiving unit, configured to receive the energy storage value and the absorption efficiency of the control board from the access network device.

In a possible implementation, the sending unit is further configured to send a second request to the access network device, where the second request is used to obtain the energy storage value and the absorption efficiency of the control board.

In a possible implementation, the determining unit is further configured to determine the state pattern of the control board.

In a possible implementation, that the determining unit determines the state pattern of the control board includes: determining the state pattern of the control board based on the three-dimensional spatial map and the location information of the control board.

In a possible implementation, that the determining unit determines the state pattern of the control board includes: determining the state pattern of the control board based on the three-dimensional spatial map, the location information of the control board, and the energy storage value and the absorption efficiency of the control board.

In a possible implementation, the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

According to a seventh aspect, a communication apparatus is disclosed. The communication apparatus may be a control board or a module (for example, a chip) in the control board. The communication apparatus may include a processor, a memory, and a transceiver. The transceiver is configured to: receive information from a communication apparatus other than the communication apparatus, and output information to the communication apparatus other than the communication apparatus. When the processor executes a computer program stored in the memory, the processor is enabled to perform the communication method according to any one of the first aspect or the implementations of the first aspect.

According to an eighth aspect, a communication apparatus is disclosed. The communication apparatus may be an access network device or a module (for example, a chip) in the access network device. The communication apparatus may include a processor, a memory, and a transceiver. The transceiver is configured to: receive information from a communication apparatus other than the communication apparatus, and output information to the communication apparatus other than the communication apparatus. When the processor executes a computer program stored in the memory, the processor is enabled to perform the communication method according to any one of the second aspect or the implementations of the second aspect.

According to a ninth aspect, a communication apparatus is disclosed. The communication apparatus may be an environment controller or a module (for example, a chip) in the environment controller. The communication apparatus may include a processor, a memory, and a transceiver. The transceiver is configured to: receive information from a communication apparatus other than the communication apparatus, and output information to the communication apparatus other than the communication apparatus. When the processor executes a computer program stored in the memory, the processor is enabled to perform the communication method according to any one of the third aspect or the implementations of the third aspect.

According to a tenth aspect, a communication system is disclosed. The communication system includes the communication apparatus in the seventh aspect, the communication apparatus in the eighth aspect, and the communication apparatus in the ninth aspect.

According to an eleventh aspect, a computer-readable storage medium is disclosed. The computer-readable storage medium stores a computer program or computer instructions. When the computer program or the computer instructions are run, the communication method according to the foregoing aspects is performed.

According to a twelfth aspect, a chip is disclosed, and includes a processor, configured to execute a program stored in a memory. When the program is executed, the chip is enabled to perform the foregoing method.

In a possible implementation, the memory is located outside the chip.

According to a thirteenth aspect, a computer program product is disclosed. The computer program product includes computer program code, and when the computer program code is run, the foregoing communication method is performed.

## BRIEF DESCRIPTION OF DRAWINGS

To describe the technical solutions in embodiments of the present invention more clearly, the following briefly describes the accompanying drawings used in describing embodiments. It is clear that the accompanying drawings in the following description show merely some embodiments of the present invention, and a person of ordinary skill in the art may still derive other drawings from these accompanying drawings without creative efforts.

FIG. 1 is a schematic diagram of a network architecture according to an embodiment of the present invention;

FIG. 2 is a schematic diagram of a scenario according to an embodiment of the present invention;

FIG. 3 is a schematic flowchart of a communication method according to an embodiment of the present invention;

FIG. 4 is a schematic diagram of communication between a terminal device and an access network device according to an embodiment of the present invention;

FIG. 5 is a schematic diagram of a frame format of location adjustment request signaling according to an embodiment of the present invention;

FIG. 6 is a schematic diagram of frame formats of query request signaling and query response signaling of an energy storage value and absorption efficiency according to an embodiment of the present invention;

FIG. 7 is a schematic diagram of a frame format of location adjustment acknowledgment signaling according to an embodiment of the present invention;

FIG. 8 is a schematic diagram of an incident wave and a reflected/transmitted wave when a control board is in different states according to an embodiment of the present invention;

FIG. 9 is a schematic diagram of a frame format of state pattern request signaling according to an embodiment of the present invention;

FIG. 10 is a schematic diagram of another scenario according to an embodiment of the present invention;

FIG. 11 is a schematic diagram of time-frequency resource and transmit power allocation according to an embodiment of the present invention;

FIG. 12 is a schematic diagram of still another scenario according to an embodiment of the present invention;

FIG. 13 is a schematic diagram of a time-domain impulse response according to an embodiment of the present invention;

FIG. 14 is a schematic diagram of time-frequency resource allocation according to an embodiment of the present invention;

FIG. 15 is a schematic diagram of signaling exchange between a terminal device, an access network device, and a control board according to an embodiment of the present invention;

FIG. 16 is a schematic diagram of a frame format of state pattern acknowledgment signaling according to an embodiment of the present invention;

FIG. 17 is a flowchart of adjusting a location and a state of a control board according to an embodiment of the present invention;

FIG. 18 is a schematic diagram of a structure of a communication apparatus according to an embodiment of the present invention;

FIG. 19 is a schematic diagram of a structure of another communication apparatus according to an embodiment of the present invention;

FIG. 20 is a schematic diagram of a structure of still another communication apparatus according to an embodiment of the present invention;

FIG. 21 is a schematic diagram of a structure of still another communication apparatus according to an embodiment of the present invention;

FIG. 22 is a schematic diagram of an analog circuit according to an embodiment of the present invention;

FIG. 23 is a schematic diagram of state switching of a control board according to an embodiment of the present invention;

FIG. 24 is a schematic diagram of a structure of still another communication apparatus according to an embodiment of the present invention;

FIG. 25 is a schematic diagram of a structure of still another communication apparatus according to an embodiment of the present invention; and

FIG. 26 is a schematic diagram of a structure of a communication system according to an embodiment of the present invention.

## DESCRIPTION OF EMBODIMENTS

Embodiments of the present invention disclose a communication method and apparatus, and a computer-readable storage medium, to improve a throughput of a communication system. The following clearly and completely describes the technical solutions in embodiments of this application with reference to the accompanying drawings in embodiments of this application.

It is clear that the described embodiments are merely some but not all of embodiments of this application. An "embodiment" mentioned in this specification means that a particular feature, structure, or characteristic described with reference to embodiments may be included in at least one embodiment of this embodiment application. The phrase appearing at various locations in this specification may not necessarily refer to a same embodiment, and is not an independent or optional embodiment exclusive from another embodiment. It may be understood explicitly and implicitly by a person skilled in the art that embodiments described in this specification may be combined with other embodiments. All other embodiments obtained by a person of ordinary skill in the art based on embodiments of this application without creative efforts shall fall within the protection scope of this application.

In this specification, claims, and accompanying drawings of this application, the terms "first", "second", "third", and the like are intended to distinguish between different objects but do not indicate a particular order. In addition, the terms "include", "have", and any other variants thereof are intended to cover a non-exclusive inclusion. For example, a series of steps or units are included, or optionally, steps or units that are not listed are further included, or optionally, other inherent steps or units of these processes, methods, products, or devices are further included.

The accompanying drawings show only a part rather than all content related to this application. Before example embodiments are discussed in more detail, it should be mentioned that some example embodiments are described as processing or methods described as flowcharts. Although the flowchart describes the operations (or steps) as sequential processing, many of the operations can be implemented in parallel, concurrently, or simultaneously. In addition, a sequence of the operations may be rearranged. The processing may be terminated when the operation is completed, but may also have additional steps that are not included in the accompanying drawings. The processing may correspond to a method, a function, a procedure, a subroutine, a subprogram, or the like.

Terms such as "component", "module", "system", and "unit" used in this specification indicate computer-related entities, hardware, firmware, combinations of hardware and software, software, or software being executed. For example, the unit may be, but is not limited to, a process running on a processor, a processor, an object, an executable file, an execution thread, a program, and/or distributed between two or more computers. In addition, these units may be executed by various computer-readable media that store various data structures. For example, the units may communicate with each other by using a local and/or remote process and based on a signal having one or more data packets (for example, data from a second unit interacting with another unit in a local system, a distributed system, and/or across a network such as the internet interacting with another system by using the signal).

The following first describes a network architecture used in embodiments of the present invention, to better understand embodiments of the present invention.

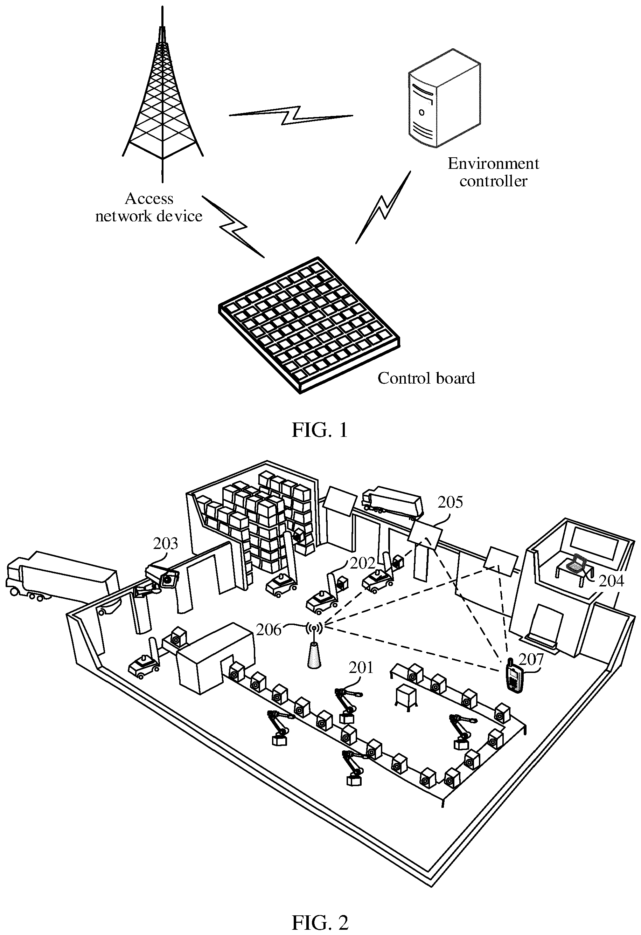

FIG. 1 is a schematic diagram of a network architecture according to an embodiment of the present invention. As shown in FIG. 1, the network architecture may include an access network device, an environment controller, and a control board. The access network device may include one or more access network devices (one access network device is shown in FIG. 1), the environment controller may include one or more environment controllers (one environment controller is shown in FIG. 1), and the control board may include one or more control boards (one control board is shown in FIG. 1).

Any two of the environment controller, the access network device, and the control board may communicate with each other, that is, any two of the environment controller, the access network device, and the control board may be interconnected with each other, and a communication manner may be wireless communication or wired communication. The access network devices may communicate with each other through an optical fiber interface, or may communicate with each other through an Xn interface. The access network device and the environment controller may communicate with each other through an air interface (for example, a Uu interface), and the access network device and the control board may also communicate with each other through an air interface. The environment controller and the control board may communicate with each other through a wireless local area network (wireless local area network, WLAN). In addition to the foregoing communication manner, any two of the environment controller, the access network device, and the control board may further communicate with each other in a manner such as Bluetooth (Bluetooth), ultra-wideband (ultra-wideband, UWB), long range radio (long range radio, LoRa), or narrowband internet of things (narrowband internet of things, NB-IoT).

It should be noted that the network architecture shown in FIG. 1 may further include one or more terminal devices, and the terminal device may communicate with the access network device, the environment controller, and the control board. The communication manner may be wireless communication or wired communication. A wireless communication standard used for communication between the terminal device and the access network device, the environment controller, and the control board may be a 2nd generation (2nd generation, 2G) mobile communication technology, a 3rd generation (3rd generation, 3G) mobile communication technology, a 4th generation (4th generation, 4G) mobile communication technology, a 5th generation (5th generation, 5G) mobile communication technology, a WLAN/wireless fidelity (wireless fidelity, Wi-Fi), Bluetooth, UWB, LoRa, NB-IoT, or a combination of the foregoing one or more wireless communication standards.

Communication between the terminal device and the access network device may include uplink communication (that is, communication from the terminal device to the access network device) and downlink communication (that is, communication from the access network device to the terminal device). In uplink communication, the terminal device is configured to send an uplink signal to the access network device, and the access network device is configured to receive the uplink signal from the terminal device. In downlink communication, the access network device is configured to send a downlink signal to the terminal device, and the terminal device is configured to receive the downlink signal from the access network device. A link corresponding to uplink communication is an uplink, and a link corresponding to downlink communication is a downlink.

It should be noted that, the network architecture shown in FIG. 1 is not limited to including only the access network device, the control board, and the environment controller shown in the figure.

It should be understood that the network architecture shown in FIG. 1 is merely an example for description, and constitutes no limitation thereto.

The terminal device may also be referred to as user equipment (user equipment, UE), a mobile station (mobile station, MS), a mobile terminal (mobile terminal, MT), or the like, and is a device that provides a user with voice and/or data connectivity. The terminal device may be a handheld terminal, a notebook computer, a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone), a wireless local loop (wireless local loop, WLL) station, a machine type communication (machine type communication, MTC) terminal, a wearable device (for example, a smartwatch, a smart band, or a pedometer), a vehicle-mounted device (for example, an automobile, a bicycle, an electric vehicle, an airplane, a ship, a train, or a high-speed rail), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, workshop equipment, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in smart home (smart home), a flying device (for example, an intelligent robot, a hot air balloon, an uncrewed aerial vehicle, or an airplane), or another device that can access a network.

The access network device may include a radio access network device, and the radio access network device is an apparatus that is deployed in a radio access network and that provides a wireless communication function for the terminal device. The radio access network (radio access network, RAN) device may include base stations (base station, BS) in various forms, for example, a macro base station, a micro base station (also referred to as a small cell), a relay station, or an access point. In systems that use different radio access technologies, names of radio access network devices may be different, for example, a base transceiver station (base transceiver station, BTS) in a global system for mobile communications (global system for mobile communications, GSM) or a code division multiple access (code division multiple access, CDMA) network, an NB (NodeB) in wideband code division multiple access (wideband code division multiple access, WCDMA), and an eNB or an eNodeB (evolved NodeB) in long term evolution (long term evolution, LTE). Alternatively, the radio access network device may be a radio controller in a cloud radio access network (cloud radio access network, CRAN) scenario. Alternatively, the radio access network device may be a base station device in a future network (such as 6G) or a radio access network device in a future evolved public land mobile network (public land mobile network, PLMN). Alternatively, the radio access network device may be a wearable device or a vehicle-mounted device. Alternatively, the radio access network device may be a transmission and reception point (transmission and reception point, TRP).

The control board may also be referred to as an electromagnetic panel (electromagnetic panel, EP), and is a device that can control (change) a direction, an amplitude, a phase, and the like of an electromagnetic wave. The control board may include a transceiver and one or more metamaterial units. The transceiver may provide a communication function, and each metamaterial unit may include a phase-shift circuit, an amplitude modulation circuit, and an absorption and energy storage circuit, to control the direction, the amplitude, the phase, and the like of the electromagnetic wave.

The environment controller is a device having a computing capability. The environment controller may perform numerical calculation, or may perform logical computation, or may have a storage function. The environment controller may run based on a preset program, to process massive data automatically and at a high speed. The environment controller may be a microcomputer, a super computer, an embedded computer, or the like, or may be another device having a computing capability

It should be noted that, in this embodiment of the present invention, data processing of the environment controller may be performed by an access network device. Therefore, the environment controller may be a module in the access network device.

The following first describes an application scenario of embodiments of the present invention, to better understand embodiments of the present invention.

FIG. 2 is a schematic diagram of a scenario according to an embodiment of the present invention. The scenario shown in FIG. 2 may be an application scenario of an automated factory in Industry 4.0. The scenario may include one or more access network devices and a plurality of different terminal devices, for example, one or more industrial robots 201, one or more automated guided vehicles (automated guided vehicle, AGV) 202, one or more surveillance cameras 203, one or more notebook computers 204, one or more control boards 205, one or more access network devices 206, and one or more smartphones 207. In addition to the foregoing devices, the scenario may further include an environment controller, an internet of things (internet of thing, IoT) device for warehousing goods, a wearable device, a patrol robot, a tablet computer, and the like.

Different types of terminal devices may have different requirements on a network rate, a latency, reliability, a quantity of connections, and the like, and have different requirements on quality of service (quality of service, QoS). Usually, the IoT device for warehousing goods has a large quantity of connections, has a general requirement on a network rate, and is sensitive to power consumption but insensitive to a latency. Usually, the AGV device often moves, requires continuous coverage, has a general requirement on a network rate, and is sensitive to a latency. Usually, the surveillance camera is in a fixed state and has a high requirement on a network rate. This facilitates data upload and storage and requires specific communication reliability. Usually, the industrial robot (an arm of the industrial robot) is fixed, has a general requirement on a network rate, is sensitive to a latency, and has a high requirement on communication reliability. Usually, the notebook computer, the tablet computer, and the like do not move frequently, and have general requirements on a network rate and communication reliability.

In addition, in the scenario shown in FIG. 2, in different time periods, communication services of the different types of terminal devices have a specific rule.

For example, small data packet services for data collection performed by a control sensor of a mechanical device, a sensor on an industrial conveyor belt, a radio frequency identification (radio frequency identification, RFID) sensor on a container support, and the like may occur once every second or every several seconds. Control signaling services of a robot may occur continuously to accurately control the robot. High-definition data services of the surveillance camera may occur once every 10 minutes. That is, video data captured in real time may be first stored in a local storage, and then the data is uploaded once every 10 minutes for data backup.

In the scenario shown in FIG. 2, a rule of communication services of the various terminal devices may be counted or predicted by using an industrial control program, and then communication service types (for example, a small data packet service for data collection performed by a sensor, a control signaling service of a robot, and a high-definition data service of a camera) and corresponding communication service data of the various terminal devices may be obtained. The communication service data may include an occurrence frequency of a communication service of the terminal device, for example, occur once every hour, once every minute, once every second, or continuously. In addition, the communication service data may further include duration of each service of the terminal device and a size of an amount of transmitted data. In addition, in the scenario of the automated factory shown in FIG. 2, the communication services of the various terminal devices may occur periodically and repeatedly every day or every hour. Therefore, a subsequent rule of the communication services of the terminal devices may be predicted based on previous prior data (that is, known data).

It should be noted that the scenario shown in FIG. 2 is not limited to including only the industrial robot, the automated guided vehicle, the surveillance camera, the notebook computer, the control board, and the like shown in the figure.

It should be understood that the scenario shown in FIG. 2 is merely an example for description, and constitutes no limitation thereto.

The following first describes conventional technologies in embodiments of the present invention, to better understand embodiments of the present invention.

With continuous development of communication technologies and emergence of various new communication service modes, a performance requirement on a wireless communication system is increasingly high. For example, a smart factory (smart factory, SF) needs to meet communication requirements of different terminal devices in the smart factory, and faces challenges of high reliability and massive connections. Therefore, a corresponding measure needs to be taken to increase a throughput of a wireless communication system and improve communication reliability.

A reconfigurable intelligent surface (reconfigurable intelligent surface, RIS) technology is a reconfigurable antenna technology that may be used to change a dielectric constant of a material surface unit. In the RIS technology, controlling an electromagnetic wave in a space dimension may be implemented based on switching control between different states, that is, controlling a direction, an amplitude, a phase, and the like of the electromagnetic wave is performed by changing the dielectric constant of the material surface unit. In addition, the RIS technology has advantages of low costs, low power consumption, and low overheads.

A wireless power transfer (wireless power transfer, WPT) technology is a wireless technology that may be used to implement contactless energy transfer and charging through electromagnetic waves. The WPT technology may be roughly classified into near-field inductive coupling WPT, far-field microwave WPT, laser beam WPT, and the like.

A smart radio environment (smart radio environment, SRE) is a radio electromagnetic wave propagation environment (channel) that is manually controlled by using technologies such as RIS and WPT. The SRE technology can change a propagation environment between an access network device and a terminal device, so that the propagation environment reaches an ideal state. This can alleviate impact caused by multipath propagation, Doppler spread, and the like on a conventional radio channel, effectively resolve problems such as signal fading and obstacle blocking, and can improve data transmission efficiency, thereby improving throughput performance of a wireless communication system.

Currently, in a process of implementing SRE by using RIS, instantaneous or statistical channel state information (channel state information, CSI) between the terminal device and RIS and instantaneous or statistical CSI between RIS and the access network device usually need to be measured, to accurately change a signal propagation environment. System overheads required for measuring the CSI between the terminal device and RIS and the CSI between RIS and the access network device are high, thereby reducing a throughput of the communication system. Therefore, how to improve the throughput of the communication system is very important.

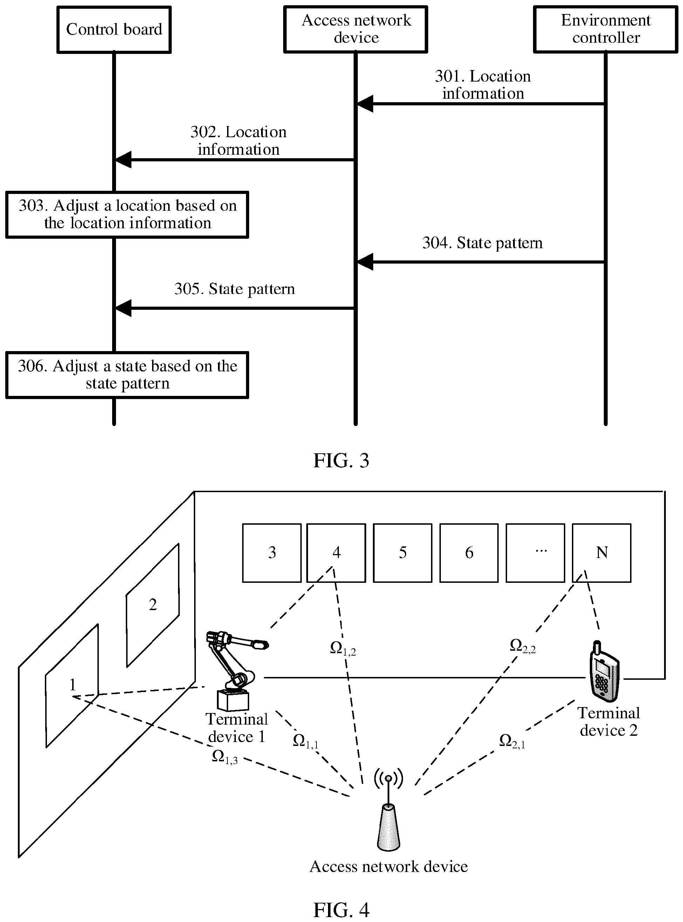

Based on the foregoing network architecture, FIG. 3 is a schematic flowchart of a communication method according to an embodiment of the present invention. As shown in FIG. 3, the communication method may include the following steps.

301. An environment controller sends location information of a control board to an access network device.

Correspondingly, the access network device may receive the location information of the control board from the environment controller, where the location information may include only rotation information, or may include only movement information, or may include both movement information and rotation information. The rotation information may include only a rotation angle, or may include both a rotation direction and a rotation angle. The movement information may include only a movement distance, or may include both a movement direction and a movement distance.

In the Industry 4.0 scenario shown in FIG. 2, space is large and an environment is complex. Therefore, communication quality of each indoor terminal device cannot be effectively ensured, and a communication requirement of a hybrid service of the terminal device cannot be met. Therefore, in this embodiment of the present invention, the control board may be controlled, to optimize a propagation environment of surrounding space of the control board, improve average transmission quality between the terminal device and the access network device, and improve an average throughput of a wireless communication system. The "propagation environment" may be understood as a physical space environment in which the environment controller, the access network device, the control board, and the terminal device are located, for example, a factory workshop, an office, or a conference room.

The environment controller may first determine the location information of the control board, and then send the location information of the control board to the access network device.

The environment controller may determine the location information of the control board based on a three-dimensional spatial map. The three-dimensional spatial map may include building structure information, location information and material information of a stationary device, communication service model information of the stationary device, and deployment information of the access network device.

The building structure information may include information such as a building structure of a factory building of an automated factory, for example, information about a length, a width, and a height of the factory building, material information and thickness information of a wall, a floor, and a ceiling, and building locations, building materials, and thickness information of a load-bearing column and a decorative column in the factory building. Then, the environment controller may establish a spatial coordinate system based on the building structure information. For example, the environment controller may use a lower right corner of the factory building as an origin (0, 0, 0) of spatial coordinate system, to establish a three-dimensional spatial coordinate system. Therefore, the environment controller may determine, based on the coordinate system, three-dimensional coordinates of a device, the load-bearing column, and the like in the factory building.

The location information and the material information of the stationary device may include installation locations of stationary devices such as a mechanical device, an industrial conveyor belt, a container support, a robotic arm, and an industrial camera in the factory building, and structural material information of the stationary devices. The structural material information may include a geometric size and a shape (for example, a length, a width, and a height, and a rectangular/circular/irregular shape) of the device, and may further include material information (for example, steel, aluminum alloy, plastic, glass, paper, leather, and carbon fiber) of the device and a surface roughness degree (for example, a mirror surface is smooth, generally smooth, generally rough, and very rough) of the device.

The communication service model information of the stationary device may include a communication service model of a device such as a control sensor of a mechanical device, a sensor on an industrial conveyor belt, an RFID sensor on a container support, a communication device of a robotic arm, and a communication device of an industrial camera. The communication service model may specifically include a service type (for example, a small packet service for sensor data collection, a control signaling service of a robot, and a high-definition data service of a camera) and service data of each device. The service data may include an occurrence frequency of a communication service of the terminal device, for example, occur once every hour, once every minute, once every second, or continuously. In addition, the service data may further include duration of each service of the terminal device and a size of an amount of transmitted data. In addition, in the scenario of the automated factory shown in FIG. 2, the communication services of the various terminal devices may occur periodically and repeatedly every day or every hour. Therefore, a subsequent rule of the communication services of the terminal devices may be predicted based on previous prior data (that is, known data).

The deployment information of the access network device may include information such as a deployment location of an antenna of one or more access network devices in a factory building, specification information of the antenna, and transmit power of the access network device. A coverage area range of the access network device and coverage strength of different ranges may be obtained based on the deployment information of the access network device.

The prior information such as the building structure information, the location information and the material information of the stationary device, the communication service model information of the stationary device, and the deployment information of the access network device may be input into the environment controller in advance, and the environment controller may locally store the prior information. It may be understood that assets such as a factory building, a mechanical device, an industrial conveyor belt, and a freight robot in the automated factory shown in FIG. 2 may belong to one or more enterprises. The one or more enterprises may obtain prior information such as the building structure information, the location information and the material information of the stationary device, the communication service model information of the stationary device, and the deployment information of the access network device, and may input the information into the environment controller in advance.

A spatial location (that is, a geographical location) of the control board may be fixed. In this case, after the control board is deployed, the spatial location of the control board is fixed, and the control board cannot move back and forth, and can only rotate by an angle or a direction.

The spatial location of the control board may alternatively be changed. In this case, the control board may be deployed on a sliding track. After the control board is deployed, the control board may rotate by an angle or a direction, or may move through the sliding track.

A quantity of required control boards may vary with a communication service and a communication requirement of the terminal device. When the communication service of the terminal device is a small data packet service, and the terminal device does not have a high requirement on a communication rate, a latency, and the like, a small quantity of control boards may be required to control a propagation environment. Correspondingly, when the communication service of the terminal device is a large data packet service, and the terminal device has a high requirement on a communication rate, a latency, and the like, a large quantity of control boards may be required to control a propagation environment.

When only some of all the control boards need to be deployed, the environment controller may select some of the deployed control boards, and then determine location information of the selected control boards. The environment controller may determine a state of another unselected control board as an absorption and energy storage (charging) state. The absorbing and energy-storing state may also be referred to as a C state briefly, and is a state in which an absorbed electromagnetic wave is converted into electric energy and stored. When the control board is in the absorbing and energy-storing state, the control board may use a circuit of the control board to absorb energy from an electromagnetic wave in a surrounding environment, convert the energy into electric energy, and store the electric energy in a local battery.

The environment controller may select a control board based on information such as the building structure information, the location information and the material information of the stationary device, the communication service model information of the stationary device, and the deployment information of the access network device.

It is assumed that when the spatial location of the control board is fixed, N control boards are deployed, and the N control boards correspond to N spatial locations; or when the spatial location of the control board is changed, Q control boards are deployed, and the Q control boards may be located at any one of N spatial locations through movement, but only one control board can exist at one spatial location at one time. The N spatial locations in the two cases may be the same or different. A quantity of control boards that need to be selected may be M. N, Q, and M are integers greater than or equal to 1, and M ≤ Q ≤ N.

The environment controller may first select M spatial locations based on information such as the building structure information, the location information and the material information of the stationary device, the communication service model information of the stationary device, and the deployment information of the access network device, and then select M control boards.

There are $C_N^M$ cases in which the environment controller selects the M spatial locations from the N spatial locations. The environment controller may assume that there are control boards at the M spatial locations in each case, and there is no control board at other N-M spatial locations. Then, the environment controller may determine an indicator such as average communication quality or an average throughput between the access network device and the terminal device in each case. Then, the environment controller may determine, as target locations, the M spatial locations in a case in which the indicator such as the average communication quality or the average throughput is best. It may be understood that the indicator such as the average communication quality or the average throughput determined by the environment controller may be in a period of time. Therefore, the obtained target location may be a target location in a period of time.

When the control board is in different spatial directions and different states at a same spatial location, the control board may cause different changes to a propagation environment of surrounding space. Consequently, transmission paths and transmission losses of the terminal device and the access network device may be different, and power of signals received by the terminal device and the access network device may be changed. Therefore, when the target location is determined, it may be assumed that the control boards at the M spatial locations in each case are in a passive forwarding state, and spatial directions of the control boards are all directions perpendicular to the wall. The passive forwarding (passive transmission) state, also referred to as a P state briefly, is a state in which an incident electromagnetic wave is reflected or transmitted. When the control board is in the passive forwarding state, the control board may directly reflect or transmit the incident electromagnetic wave without performing any processing. In this case, the control board neither absorbs energy from the surrounding environment nor releases energy of the local battery to the outside.

The environment controller may select the M spatial locations from the N spatial locations by using Formula (1):

$$\max_{L} \bar{R}_{sum} = \frac{1}{T} \int_0^T dt \cdot \sum_{k=1}^K \left[ \sum_{i=1}^{rank(\Omega_k(t))} log_2 \big( 1 + \gamma_{k,i}(t) \big) \right] \quad (1)$$

L is a spatial location set, may have $C_N^M$ cases (values), and may be denoted as L = {$L_1, \cdots, L_m, \cdots, L_M$}, where $L_m = (x_m, y_m, z_m)$ and $1 \le m \le M$. $x_m, y_m, z_m$ respectively represent coordinate locations of an x-axis, a y-axis, and a z-axis of an $m^{th}$ spatial location, that is, coordinate locations determined based on a three-dimensional spatial map. $\bar{R}_{sum}$ may represent an average sum-rate (average sum-rate) of time, and may be in a unit of bit/s (bit/s). T may represent a length of a time window, and may be in a unit of second (s). K may represent a quantity of activated service users, or may be understood as a quantity of terminals having a communication service (an uplink communication service or a downlink communication service), and may be obtained based on communication service model information included in the three-dimensional spatial map, or may be obtained through model prediction. $rank(\Omega_k(t))$ may represent a quantity of ranks (rank) of a $k^{th}$ user on an angle domain multipath at a moment $t$, or may be understood as a quantity of signal transmission paths between a $k^{th}$ terminal device and the access network device at the moment t (transmission paths of the access network device and the terminal device may be the same). $\gamma_{k,i}(t)$ may represent a signal-to-noise ratio of the $k^{th}$ user in an $i^{th}$ angle domain at the moment $t$, or may be understood as a signal-to-noise ratio of a signal that is from the access network device and that is received by the $k^{th}$ terminal device on an $i^{th}$ transmission path at the moment $t$ or a signal-to-noise ratio of a signal that is from the $k^{th}$ terminal device and that is received by the access network device on the $i^{th}$ transmission path at the moment $t$.

The spatial location set includes M elements, the M elements are selected from the N spatial locations, and there are a total of $C_N^M$ spatial location sets. The environment controller may calculate $\overline{R}_{sum}$ in each spatial location set. max refers to selecting a spatial location set in which $\overline{R}_{sum}$ may be largest in the $C_N^M$ spatial location sets.

According to the Shannon formula, assuming that a channel bandwidth W is 1, $log_2(1 + \gamma_{k,i}(t))$ in the foregoing formula may be understood as a communication rate (channel capacity) of the $k^{th}$ terminal device on the $i^{th}$ transmission path at the moment $t$. $\sum_{i=1}^{rank(\Omega_k(t))} log_2(1 + \gamma_{k,i}(t))$ may be understood as a sum of communication rates of the $k^{th}$ terminal device on $rank(\Omega_k(t))$ transmission paths at the moment $t$. $\sum_{k=1}^{K}\left[\sum_{i=1}^{rank(\Omega_k(t))} log_2(1 + \gamma_{k,i}(t))\right]$ may be understood as an accumulation of a sum of communication rates of all of K terminal devices at the moment $t$. $\int_0^T dt$ indicates that an integral is performed on a period of time $T$. An accumulation of a sum of communication rates of all of the K terminal devices at each moment in the period of time $T$ may be obtained by using the integral, and then the sum is divided by $T$ to obtain an average value $\overline{R}_{sum}$ of the period of time.

It may be understood that, if only a signal sent by the access network device to the terminal device in the period of time ($T$) is considered, that is, only downlink communication is considered, $\overline{R}_{sum}$ may represent an average downlink communication rate of all terminal devices in the factory building of the automated factory shown in FIG. 2 in a period of time. Therefore, the M spatial locations (target locations) obtained by using Formula (1) may be M spatial locations at which an average downlink communication rate is largest, that is, at which an average downlink throughput is largest. Similarly, if only a signal sent by the terminal device to the access network device in the period of time ($T$) is considered, that is, only uplink communication is considered, the target locations obtained by using Formula (1) may be M spatial locations at which an average uplink communication rate in the period of time is largest, that is, at which an average uplink throughput is largest. If the signal sent by the terminal device to the access network device and the signal sent by the access network device to the terminal device in the period of time ($T$) are considered, that is, both uplink communication and downlink communication are considered, the target locations obtained by using Formula (1) may be M spatial locations at which a total average uplink and downlink communication rate in the period of time is largest, that is, at which an average uplink and downlink throughput of a communication system is largest.

The length $T$ of the time window in Formula (1) may be selected based on an actual situation, for example, may be 10 seconds, 1 minute, or 10 minutes.

Because the environment controller needs to know communication service data (that is, a service type and service data) in a period of time ($T$), the environment controller can determine which terminal devices have communication services at each moment, and can determine K in the foregoing formula. Therefore, the environment controller may first determine communication service data in the period of time ($T$).

The environment controller may determine communication service data in the period of time ($T$) based on the communication service model information of the stationary device. For example, the environment controller may determine, based on the communication service model information, a communication service of the terminal device in a first time period (for example, 8:10 to 8:15) and a communication service of the terminal device in a second time period (for example, 8:15 to 8:25). When the terminal device is a robot, the communication service may include a control signaling service of the robot. The control signaling service may occur once every 5 seconds in the first time period, and lasts for 1 second each time. The control signaling service may occur once every 10 seconds in the second time period, and lasts for 1 second each time.

The environment controller may directly determine communication service data in a period of time ($T$) based on the communication service model information of the stationary device. In the scenario of the automated factory shown in FIG. 2, the communication services of the various terminal devices may occur periodically and repeatedly every day or every hour. Therefore, the environment controller may directly determine a service type and service data of the terminal device in a future time period based on the previous service type and service data. For example, the terminal device may have a same service type and same service data every day. Therefore, the environment controller may determine a service type and service data of the terminal device from 8:10 to 8:15 on the current day as a service type and service data of the terminal device from 8:10 to 8:15 on the next day.

The environment controller may also establish a model based on the communication service model information of the stationary device, and determine communication service data in the period of time ($\Gamma$) based on the model. Specifically, the environment controller may establish a model based on some or all previous prior data (that is, known service type and service data information) of the terminal device to predict a rule of a communication service of the terminal device in a future period of time, so as to determine the service type and the service data of the terminal device. For example, the environment controller may establish a neural network model or another machine learning model to predict a service type and service data of the terminal device in a next time period. A training sample of the model may be the previous prior data (that is, the known service type and service data information of the terminal device) of the terminal device. Input of the model may be information about a service type and service data of the terminal device in a current time period (8:10 to 8:15), and output of the model may be information about a service type and service data of the terminal device in a next time period (8:15 to 8:20).

After determining a terminal device that has a communication service at each moment, the environment controller may determine a quantity (that is, $rank(\Omega_k(t))$) of transmission paths of the terminal device that has the communication service at each moment and a signal-to-noise ratio (that is, $\gamma_{k,i}(t)$) corresponding to each transmission path.

The environment controller may determine $rank(\Omega_k(t))$ based on the building structure information, the location information and the material information of the stationary device, and the deployment information of the access network device. Specifically, the environment controller may determine a spatial location of the access network device based on the deployment information of the access network device, and may determine a spatial location of the terminal device based on the location information of the stationary device. In addition, the environment controller may determine, based on the building structure information, the location information and the material information of the stationary device, and the deployment information of the access network device, transmission paths (propagation paths) through which a signal sent by the access network device to the terminal device can reach the terminal device, and may determine transmission paths through which a signal sent by the terminal device to the access network device can reach the access network device, so as to determine a quantity (that is, $rank(\Omega_k(t))$) of transmission paths. For example, the environment controller may determine, based on information such as the building structure information, the location information and the material information of the stationary device, and the deployment information of the access network device, the transmission paths by simulating signals of the access network device and the terminal device. When a surrounding propagation environment remains unchanged, a transmission path through which the terminal device sends a signal to the access network device may be the same as a transmission path through which the access network device sends a signal to the terminal device. When a surrounding propagation environment changes (for example, a spatial location of the control board changes), a transmission path through which the terminal device sends a signal to the access network device may be different from a transmission path through which the access network device sends a signal to the terminal device.

The environment controller may determine $\gamma_{k,i}(t)$ based on the building structure information, the location information and the material information of the stationary device, and the deployment information of the access network device. Specifically, the environment controller may determine a transmission loss based on the building structure information, the location information and the material information of the stationary device, and the deployment information of the access network device, and determine $\gamma_{k,i}(t)$ based on the transmission loss. The environment controller may determine a transmission loss (that is, a downlink loss) of a signal sent by the access network device to the terminal device on each transmission path, or may determine a transmission loss (that is, an uplink loss) of a signal sent by the terminal device to the access network device on each transmission path. The transmission loss may include a free space propagation loss, a reflection loss, a transmission loss, and the like. A free space propagation loss, a reflection loss, a transmission loss, and the like of an electromagnetic wave signal vary with a frequency of the electromagnetic wave signal. A higher frequency of an electromagnetic wave indicates a shorter wavelength and a higher free space propagation loss. A lower frequency of an electromagnetic wave indicates a longer wavelength and a lower free space propagation loss. In addition, signal reflection and transmission on different materials, such as glass, paper, leather, carbon fiber, a gypsum board wall, and a brick wall, have different degrees of losses. For example, after a 2.4 GHz signal penetrates the gypsum board wall, the signal may decrease by 3 dB, that is, the signal is attenuated by 3 dB. For another example, after a 2.4 GHz signal penetrates the brick wall, the signal may decrease by 12 dB, that is, the signal is attenuated by 12 dB.

The following describes a manner of determining the transmission loss in an embodiment of the present invention.

The environment controller may determine a spatial distance between the access network device and the terminal device, and determine a transmission loss based on the spatial distance. Specifically, three-dimensional spatial coordinates of a transmitter (transmitter, TX) and a receiver (receiver, RX) may be respectively denoted as $(x_1, y_1, z_1)$ and $(x_2, y_2, z_2)$. Then, a spatial distance $d_{3D}$ between the TX and the RX may be determined based on the three-dimensional spatial coordinates of the TX and the RX by using Formula (2). The TX may be understood as a device for sending a signal, and may be an access network device or a terminal device. The RX may be understood as a device for receiving a signal sent by the transmitter, and may be an access network device or a terminal device.

$$d_{3D} = \sqrt{(x_1 - x_2)^2 + (y_1 - y_2)^2 + (z_1 - z_2)^2} \qquad (2)$$

When $1m \le d_{3D} \le 150m$, the environment controller may classify a large-scale path transmission loss (path loss, PL) from the TX to the RX based on a line-of-sight (line-of-sight, LOS) and a non-line-of-sight (non-line-of-sight, NLOS), which are respectively denoted as $PL_{LOS}$ and $PL_{NLOS}$, and are in a unit of decibel (dB). The LOS may be understood as a connection line path existing when two points of the three-dimensional spatial coordinates of the TX and the RX are connected and there is no obstacle in the middle of a connection line. On the contrary, the NLOS may be understood as a path existing when there is an obstacle in the middle of the connection line. When $d_{3D} \geq$ 150m, the environment controller may calculate the large-scale path transmission loss from the TX to the RX based on $d_{3D}$ = 150m.

The environment controller may calculate the transmission loss on a transmission path from the transmitter to the receiver by using Formula (3), Formula (4), and Formula (5):

$$PL_{LOS} = 32.4 + 17.3log_{10}(d_{3D}) + 20log_{10}(f_c) \quad (3)$$

$$PL_{NLOS} = \max(PL_{LOS}, PL'_{NLOS}) \quad (4)$$

$$PL'_{NLOS} = 32.4 + 31.9log_{10}(d_{3D}) + 20log_{10}(f_c) \quad (5)$$

Formula (3) may be used to calculate a line-of-sight transmission loss; and Formula (3), Formula (4), and Formula (5) may be combined to calculate a non-line-of-sight transmission loss. $f_c$ in the foregoing formula may be a carrier frequency (that is, a carrier frequency of the access network device), and is in a unit of GHz. The operator max(a,b) is used to select a larger value between a and b, for example, max(10,5)=10.

The environment controller may determine a signal-to-noise ratio $\gamma_{k,i}(t)$ of the terminal device based on the transmission loss. Assuming that transmit power of the access network device, the transmit power of the terminal device, and noise in a signal transmission process are fixed, the environment controller may determine signal-to-noise ratios (signal-to-noise ratio, SNR) of signals received by the terminal device and the access network device. For example, the transmit power of the access network device may be 40 dBm, noise power may be -30 dBm, and the signal is attenuated by 10 dB in the transmission process. Therefore, receive power of the terminal device may be 30 dBm, and a signal-to-noise ratio of the signal received by the terminal device may be 60 dB.

For example, FIG. 4 is a schematic diagram of communication between a terminal device and an access network device according to an embodiment of the present invention. As shown in FIG. 4, assuming that M is 3, the selected M spatial locations may be a spatial location 1, a spatial location 4, and a spatial location N. In this case, $\overline{R}_{sum}$ may be calculated by using Formula (1). In this case, that is, when there is a control board (P state) only at the spatial location 1, the spatial location 4, and the spatial location N, the environment controller may determine, based on the three-dimensional spatial map, that a signal sent by the access network device to a terminal device 1 may reach the terminal device 1 through $\Omega_{1,1}$, $\Omega_{1,2}$, and $\Omega_{1,3}$, and a signal sent by the access network device to a terminal device 2 may reach the terminal device 2 through $\Omega_{2,1}$ and $\Omega_{2,2}$. Similarly, when the propagation environment remains unchanged, the signal sent by the terminal device to the access network device may also reach the access network device through a same path. The environment controller may also determine losses on all paths $\Omega_{1,1}$, $\Omega_{1,2}$, and $\Omega_{1,3}$ from the access network device to the terminal device 1 and losses on both paths $\Omega_{2,1}$ and $\Omega_{2,2}$ from the access network device to the terminal device 2. In addition, when the transmit power of the access network device and the transmit power of the terminal device are fixed, and the noise power on the transmission path is also fixed, the environment controller may determine signal-to-noise ratios of signals received by the terminal device 1 and the terminal device 2 on each path. The environment controller may also determine communication service data between the access network device and each of the terminal device 1 and the terminal device 2, so that $\overline{R}_{sum}$ in the time period can be determined according to Formula (1). Alternatively, the environment controller may select different M spatial locations, calculate $\overline{R}_{sum}$, and then determine a spatial location corresponding to largest $\overline{R}_{sum}$ as a target location. It should be understood that the communication between the terminal device and the access network device shown in FIG. 4 is merely an example for description, and constitutes no limitation thereto.

Formula (1) is a typical combinatorial optimization problem, and may be solved by using an alternating direction method of multipliers (alternating direction method of multipliers, ADMM) or another method. The ADMM is a method that can resolve a separable convex optimization problem; and can equally decompose an objective function of an original problem into several solvable sub-problems, then solve all the sub-problems in parallel, and finally coordinate solutions of the sub-problems to obtain a global solution of the original problem.

It may be understood that the environment controller may also select the M spatial locations from the N spatial locations by using various variations of Formula (1). For example, $\gamma_{k,i}(t)$ may be replaced with another function related to the transmission loss, for example, a function related to a reciprocal of the transmission loss. Formula (1) is merely an example for description, and another formula that can implement an equivalent function may be used. This is not limited herein.

After selecting the M spatial locations (that is, the target locations), the environment controller may further select the M control boards. The selected M control boards are in one-to-one correspondence with the selected M spatial locations. When the spatial location of the control board is fixed, the environment controller may select the M control boards at the target locations, where the M control boards correspond to spatial locations of the M control boards. When the spatial location of the control board is changed, the environment controller may select M control boards with a large energy storage value, or may randomly select M control boards. In this case, the correspondence between the M control boards and the M spatial locations may be: A control board with a large energy storage value may correspond to a spatial location that is far from the access network device in the M spatial locations, and a control board with a small energy storage value may correspond to a spatial location that is close to the access network device in the M spatial locations.

The environment controller may determine movement information based on the spatial locations corresponding to the selected M control boards. When the spatial location of the control board is changed, the environment controller may determine the movement information based on the spatial locations corresponding to the selected M control boards. In one case, the movement information may include a movement direction and a movement distance. The movement information may be a specific absolute spatial location (for example, three-dimensional spatial coordinates). In this case, the environment controller may directly determine a spatial location corresponding to the control board as the movement information. The movement information may alternatively be a specific movement direction and a specific movement distance relative to a current spatial location of the control board. For example, the movement direction may be moving right, and the movement distance may be 10 meters. In this case, the environment controller may determine the movement information based on the current spatial location of the control board. In another case, the movement information may include only a movement distance. In this case, the control board may pre-specify a default movement direction (for example, moving right or moving left), and the environment controller may also determine the movement information based on a current spatial location of the control board. After determining the movement information, the environment controller may send the location information to the access network device, where the location information may include the movement information. It can be learned that the environment controller may determine the movement information based on the three-dimensional spatial map.

When sending the location information, the environment controller may send identification information of the control board, for example, an identifier (identifier, ID) of the control board, where the ID of the control board is in one-to-one correspondence with the location information of the control board. For example, all control boards may be numbered from 0.

The environment controller may determine rotation information based on the three-dimensional spatial map. Specifically, after the environment controller selects a control board based on the three-dimensional spatial map, the environment controller may further determine a spatial direction of the selected control board, and then the environment controller may determine the rotation information based on the spatial direction.

The environment controller may determine a spatial direction of the control board based on the three-dimensional spatial map. After selecting M control boards, the environment controller may determine an indicator such as average communication quality or an average throughput between the access network device and the terminal device when the M control boards are in different spatial directions at corresponding spatial locations, and then may determine, as target directions, M spatial directions in which the indicator such as the average communication quality or the average throughput is the best. It is assumed that there may be S spatial directions (postures) of the control board. Therefore, there may be $S^M$ different spatial direction combinations. The spatial directions may be understood as different angles of the control board. Different spatial directions of the control board correspond to different angles of the control board.

For example, the environment controller may separately calculate, by using Formula (1), $\overline{R}_{sum}$ when the M control boards are in different spatial directions, and the environment controller may obtain $S^M$ results $\overline{R}_{sum}$. Then, the environment controller may determine, as target directions, M spatial directions of a control board corresponding to largest $\overline{R}_{sum}$.

It may be understood that the environment controller may also determine the M spatial locations and the spatial directions of the control boards at the M spatial locations, provided that an angle $\vec{\theta}_m$ (that is, a spatial direction of a control board at an $m^{th}$ spatial location) is added to $L_m$ in L in Formula (1), that is, $L_m = (x_m, y_m, z_m, \vec{\theta}_m)$, where $1 \leq m \leq M$. $\vec{\theta}_m$ represents the spatial direction of the control board at the $m^{th}$ spatial location, that is, an orientation of the control board. In this case, the environment controller has a larger calculation amount, and needs to calculate $\overline{R}_{sum}$ in $C_N^M \cdot S^M$. However, because the environment controller considers both the spatial location and the spatial direction of the control board, and calculates $\overline{R}_{sum}$ in more cases, the environment controller can obtain a more accurate result.

The environment controller may determine the rotation information based on the spatial direction of the control board. In one case, the rotation information may include a rotation direction and a rotation angle. In this case, the rotation information may be a specific rotation direction in which and a specific rotation angle at which the control board needs to be adjusted to the spatial direction. For example, the rotation direction is clockwise, and the rotation angle is 90°. The environment controller may determine the rotation information based on a current spatial direction of the control board. The rotation information may alternatively be an absolute angle value $\vec{\theta}$, that is, a spatial direction (target orientation) of the control board. The spatial direction may be a spatial direction in which the control board rotates clockwise in a horizontal direction, or may be a spatial direction in which the control board rotates counterclockwise in a horizontal direction. For example, that $\vec{\theta}$ is 90° may represent a spatial direction in which the control board rotates clockwise by 90° in a horizontal direction. In this case, the environment controller may directly determine a corresponding angle of the control board as the rotation information. In another case, the rotation information may alternatively include only a rotation angle. In this case, the control board may have a default rotation direction (counterclockwise or clockwise) in advance, and the environment controller may also determine the rotation information based on a current spatial direction of the control board. After determining the rotation information, the environment controller may send the location information to the access network device, where the location information may include the rotation information.

It should be noted that the environment controller may locally store information about a previous spatial location and a previous spatial direction of the control board.

It may be understood that, when the spatial location of the control board is fixed, the location information sent by the environment controller to the access network device may include only the rotation information. When the spatial location of the control board is changed, the location information sent by the environment controller to the access network device may include only the movement information or the rotation information, or may include both the movement information and the rotation information. When the target location of the control board is the same as the current spatial location of the control board, the control board does not need to adjust the spatial location of the control board, and the location information may include only the rotation information. In the foregoing two cases, a same final effect can be achieved, that is, same performance (for example, a same throughput) of a communication system can be improved.

The environment controller uses only the three-dimensional spatial map to determine the location information. However, in actual application, absorption and energy storage efficiency of the control board may vary with a distance from the access network device or the terminal device. For example, a control board closer to the access network device usually has higher absorption and energy storage efficiency, and a control board farther from the access network device usually has lower absorption and energy storage efficiency. Therefore, when determining the location information of the control board, the environment controller may consider the absorption and energy storage efficiency and an energy storage value of the control board.

The environment controller may determine the location information of the control board based on the three-dimensional spatial map, and the energy storage value and the absorption efficiency of the control board. The absorption and energy storage efficiency may also be referred to as absorption efficiency.

Considering different absorption and energy storage efficiency of control boards at different spatial locations, Formula (1) may be improved. Because the absorption and energy storage efficiency of the control board may be related to a distance between the access network device and the control board, a bias term may be added to Formula (1), where the bias term may be a function of the absorption and energy storage efficiency of the control board. For example, for details, refer to Formula (6):

$$\max_{L} \bar{R}_{sum} = \frac{1}{T} \int_0^T dt \cdot \sum_{k=1}^K \left[ \sum_{i=1}^{rank(\Omega_k(t))} log_2 \left( 1 + \gamma_{k,i}(t) \right) \right] + a \sum_{j=1}^M c_j \quad (6)$$

$c_j$ in $a \sum_{j=1}^M c_j$ may represent absorption and energy storage efficiency of a control board at a $j^{th}$ spatial location in the selected M spatial locations, for example, may be 30% or 50%, and $a$ may be a weight coefficient, and different values of $a$ may be selected based on an actual situation, for example, may be 0.5 and 0.9.

It can be learned that, if absorption and energy storage efficiency of the control boards at the selected M spatial locations is higher, a result of the bias term $a \sum_{j=1}^M c_j$ is larger, and therefore a result of $\bar{R}_{sum}$ is larger. In this way, the M spatial locations finally determined by using Formula (6) are biased toward spatial locations with high absorption and energy storage efficiency of the control board, which may facilitate energy storage of the control board.

In addition, during selection of the M spatial locations, the energy storage value of the control board may be further considered. If the energy storage value of the control board is larger, it indicates that the control board stores more energy. In this case, the absorption and energy storage efficiency of the control board may be less considered. If the energy storage value of the control board is smaller, it indicates that stored energy of the control board may be insufficient. In this case, the absorption and energy storage efficiency of the control board needs to be considered more.

Therefore, Formula (6) may be correspondingly improved. For example, the absorption and energy storage efficiency $c_j$ of the control board is multiplied by a weight $b_j$, where the weight is related to the energy storage value of the control board. A larger energy storage value may indicate a smaller weight, and a smaller energy storage value may indicate a larger weight. For details, refer to Formula (7).

$$\max_{L} \bar{R}_{sum} = \frac{1}{T}\int_0^T dt \cdot \sum_{k=1}^K \left[\sum_{i=1}^{rank(\Omega_k(t))} log_2\left(1 + \gamma_{k,i}(t)\right)\right] + a\sum_{j=1}^M (b_j \cdot c_j) \ (7)$$

$b_j$ may be a difference between 1 and a percentage of the energy storage value of the control board (that is, 1 minus the energy storage value). The control board may be a control board corresponding to a $j^{th}$ spatial location in the selected M spatial locations. Therefore, $b_j$ is greater than or equal to 0, and is less than or equal to 1. The energy storage value may be 30% or 50%.

It can be learned that, in Formula (7), the energy storage value of the control board and absorption and energy storage efficiency of the control board at different spatial locations may be comprehensively considered. Therefore, the finally determined M spatial locations may improve average absorption and energy storage efficiency of the control board.

It may be understood that the environment controller may also select the M spatial locations from the N spatial locations by using various variations of Formula (6) and Formula (7). For example, $a\sum_{j=1}^M c_j$ in Formula (6) may also be replaced with a function of distances between the M spatial locations and the access network device, for example, may be replaced with $-log_{10}(\sum_{j=1}^M d_j)$, where $d_j$ may represent a distance from a $j^{th}$ spatial location in the selected M spatial locations to the access network device, and may be in a unit of meter (m). It can be learned that, if the selected M spatial locations are farther from the access network device, a sum of the distances between the M spatial locations and the access network device is larger. Therefore, a result of the bias term $log_{10}(\sum_{j=1}^M d_j)$ is larger, and therefore a result of $\bar{R}_{sum}$ is smaller. Therefore, the M spatial locations finally determined by using Formula (6) are biased toward spatial locations close to the access network device. Formula (6) and Formula (7) are merely examples for description, and another formula that can implement an equivalent function may be used. This is not limited herein.

The environment controller may receive the energy storage value and the absorption efficiency of the control board from the access network device. In one case, the access network device may actively send the energy storage value and the absorption efficiency of the control board to the environment controller. Correspondingly, the environment controller may receive the energy storage value and the absorption efficiency of the control board from the access network device. The energy storage value may be an energy storage value percentage (for example, 30% or 60%) of the control board, or may be a specific energy storage value (for example, 100 milliampere-hours (mAh)) of the control board. The absorption efficiency may be efficiency (for example, 50% or 80%) of absorbing electromagnetic wave energy and converting the energy into electric energy by the control board, and may be a function related to a distance between the control board and a device (for example, the access network device or the terminal device) transmitting an electromagnetic wave. In another case, the environment controller may obtain the energy storage value and the absorption efficiency of the control board by sending a second request to the access network device. Correspondingly, the access network device may receive the second request from the environment controller, and then the access network device may send the energy storage value and the absorption efficiency of the control board to the environment controller based on the second request.

302. The access network device sends the location information of the control board to the control board.

After the access network device receives the location information of the control board from the environment controller, the access network device may send the location information to the control board.

The access network device may send the location information to the control board by using location adjustment request signaling (Request, REQ). The location adjustment REQ may include an identifier (BS-ID) of the access network device, an identifier (EP-ID) of the control board, rotation information of the control board, movement information of the control board, and a CRC character.

It may be understood that, when the spatial location of the control board is fixed, the location information may include only the rotation information. Therefore, the location adjustment REQ may include only the rotation information. When the spatial location of the control board is changed, the location information may include only the movement information or the rotation information, or may include both the movement information and the rotation information. Therefore, the location adjustment REQ may include only the movement information or the rotation information, or may include both the movement information and the rotation information.

To unify frame formats of location adjustment REQ, the location adjustment REQ may include the movement information and the rotation information. However, when the location information does not include the movement information or the rotation information, values of the movement information and the rotation information in the location adjustment REQ may be set to null (NULL). The environment controller may also send the location information to the access network device by using the location adjustment REQ.

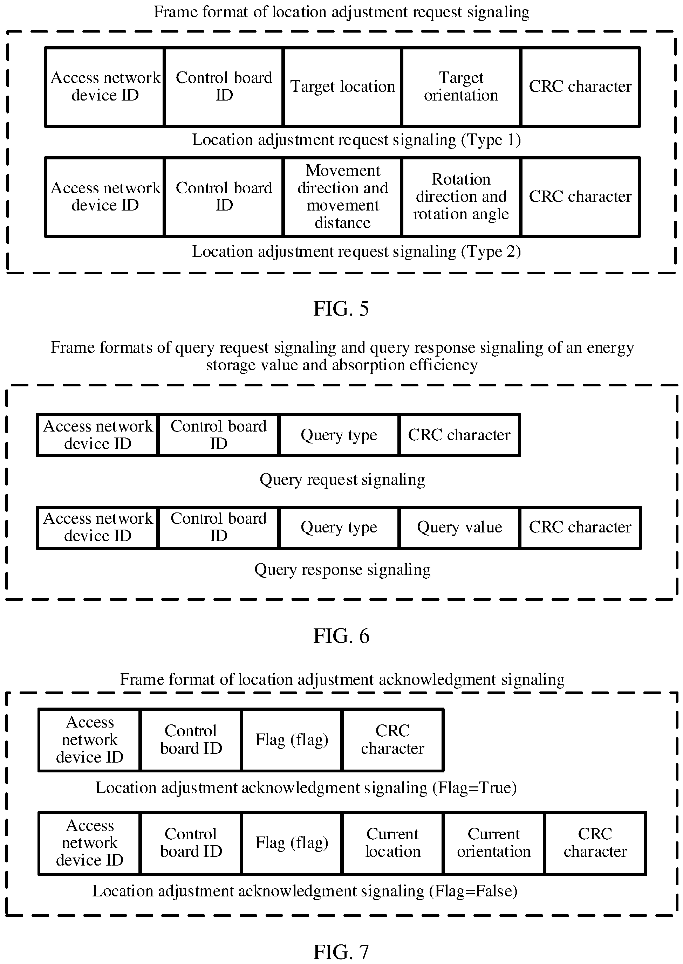

FIG. 5 is a schematic diagram of a frame format of location adjustment request signaling according to an embodiment of the present invention. As shown in FIG. 5, location adjustment request signaling (Type 1) may include an access network device ID, a control board ID, a target location (that is, a spatial location corresponding to a control board), a target orientation (that is, an angle corresponding to the control board), and a CRC character; and location adjustment request signaling (Type 2) may include an access network device ID, a control board ID, a movement direction and a movement distance, a rotation direction and a rotation angle, and a CRC character. It may be understood that the frame format shown in FIG. 5 is merely an example for description, and constitutes no limitation thereto.

An access network device may receive an energy storage value and absorption efficiency from a control board. In one case, the control board may directly send the energy storage value and the absorption efficiency of the control board to the access network device. Correspondingly, the access network device may receive the energy storage value and the receiving efficiency from the control board.

In another case, the access network device may obtain the energy storage value and the absorption efficiency of the control board by sending a first request to the control board. Correspondingly, the control board may receive the first request from the access network device, and then the control board may send the energy storage value and the absorption efficiency of the control board to the access network device based on the first request.

The first request may include energy storage value query signaling (check, CEK), where the energy storage value CEK may include an identifier (BS-ID) of the access network device, an identifier (EP-ID) of the control board, a query type, and a cyclic redundancy check (cyclic redundancy check, CRC) character. Correspondingly, the control board may receive the energy storage value query signaling CEK from the access network device, and then the control board may send (feed back) energy storage value response signaling (response, RSP) to the access network device, where the energy storage value RSP may carry current energy storage value information of a local battery of the control board, the energy storage value RSP may include an identifier (EP-ID) of the control board, an identifier (BS-ID) of the access network device, a query type, a query value, and a CRC character.

The first request may also include absorption efficiency query signaling (CEK), where the absorption efficiency CEK may include an identifier (BS-ID) of the access network device, an identifier (EP-ID) of the control board, a query type, and a CRC character. Correspondingly, the control board may receive the absorption efficiency CEK from the access network device, and then the control board may send (feed back) absorption efficiency response signaling (RSP) to the access network device, where the absorption efficiency RSP may carry a relationship between the absorption efficiency of the control board and a distance between the control board and a device transmitting an electromagnetic wave, and may also carry efficiency information of converting an average absorbed electromagnetic wave into local battery electric energy by the control board in a previous period of time. The absorption efficiency RSP may include an identifier (EP-ID) of the control board, an identifier (BS-ID) of the access network device, a query type, a query value, and a CRC character.

It may be understood that the energy storage value query request (signaling) and the absorption efficiency query request (signaling) may be sent separately, that is, an environment controller may query only the energy storage value or the absorption efficiency each time. The energy storage value query signaling and the absorption efficiency query signaling may use a unified frame format. The BS-ID may uniquely identify an access network device, and may be an identifier including a public land mobile network (public land mobile network, PLMN) code or the like. The query type may be a type such as an energy storage value or absorption efficiency, and may be specifically a specific value. For example, a value "1" may indicate that the energy storage value is queried, and a value "2" may indicate that the absorption efficiency is queried. The cyclic redundancy check character may be used to detect or check errors occurring in data transmission. The query value may be a value corresponding to a specific query type. For example, when the query type is absorption efficiency, the corresponding query value is the absorption efficiency of the control board. When the query type is an energy storage value, the corresponding query value is the energy storage value of the control board.

FIG. 6 is a schematic diagram of frame formats of query request signaling and query response signaling of an energy storage value and absorption efficiency according to an embodiment of the present invention. As shown in FIG. 6, the query request signaling may include an access network device ID, a control board ID, a query type, and a CRC character. The query response signaling may include an access network device ID, a control board ID, a query type, a query value, and a CRC character. It may be understood that the frame format shown in FIG. 6 is merely an example for description, and constitutes no limitation thereto.

After receiving an energy storage value and absorption efficiency from a control board, an access network device may send the energy storage value and the absorption efficiency of the control board to an environment controller. In one case, the access network device may directly send the energy storage value and the absorption efficiency of the control board to the environment controller. For example, the access network device may send the energy storage value and the absorption efficiency of the control board to the environment controller at a fixed period (for example, 10 seconds or 30 seconds). In another case, after receiving a second request from the environment controller, the access network device may send the energy storage value and the absorption efficiency of the control board to the environment controller based on the second request.

303. The control board adjusts a location based on the location information.

After receiving the location information from the access network device, the control board may adjust the location of the control board based on the location information.

The control board may receive the location information by using location adjustment REQ from the access network device, where the location adjustment REQ may include an identifier (such as an EP-ID) of the control board, rotation information of the control board, movement information of the control board, and the like. The control board may determine, based on the identifier of the control board, whether the location adjustment REQ is sent to the control board. When the control board determines that the location adjustment REQ is sent to the control board, the control board may adjust the location of the control board based on the rotation information and/or the movement information included in the location adjustment REQ.

When the rotation information is not NULL, the control board may adjust a spatial direction of the control board based on the rotation information. If the rotation information includes a rotation direction and a rotation angle, the control board may adjust the spatial direction of the control board based on the rotation direction and the rotation angle.

In one case, the rotation information may implicitly include a rotation direction and a rotation angle. In this case, the rotation information may be an absolute angle value $\vec{\theta}$, that is, a spatial direction (target orientation) of the control board, and the angle value $\vec{\theta}$ may be an angle value based on a horizontal direction. The rotation direction may be clockwise or counterclockwise by default, that is, the rotation direction may be pre-specified. For example, 90° may represent an angle at which the control board rotates clockwise by 90° in a horizontal direction, or may represent an angle at which the control board rotates counterclockwise by 90° in a horizontal direction. The control board may determine, based on the angle value $\vec{\theta}$, a specific degree by which the control board needs to rotate clockwise or counterclockwise. For example, a current spatial direction of the control board is a clockwise direction of 50°, and the rotation information is 90°. Assuming that the rotation direction is clockwise by default, the control board needs to rotate clockwise by 40° to adjust to a spatial direction corresponding to the rotation information. Adjusting the spatial direction by the control board is adjusting an orientation (that is, a posture) of a metamaterial panel of the control board.

In another case, the rotation information may explicitly include a rotation direction and a rotation angle. In this case, the control board may directly adjust the spatial direction of the control board based on the rotation direction and the rotation angle. For example, the rotation direction is clockwise, and the rotation angle is 90°. The control board may directly rotate clockwise by 90° based on the rotation information to adjust to a corresponding spatial direction.

If the rotation information includes only the rotation angle, the control board may adjust the spatial direction of the control board based on the rotation angle. In this case, the control board may have a default rotation direction (counterclockwise or clockwise) in advance. For example, a default rotation direction of the control board is clockwise. When the rotation angle is 90°, the control board may directly rotate clockwise by 90° to adjust to a corresponding spatial direction.

When the movement information is not NULL, the control board may adjust a spatial location of the control board based on the movement information. If the movement information includes a movement direction and a movement distance, the control board may adjust the spatial direction of the control board based on the movement direction and the movement distance.

In one case, the movement information may implicitly include a movement direction and a movement distance. In this case, the movement information may be an absolute target spatial location (for example, three-dimensional spatial coordinates). The control board may determine the movement direction and the movement distance based on three-dimensional spatial coordinates of a current location of the control board and three-dimensional spatial coordinates of the target spatial location. For example, the three-dimensional spatial coordinates of the target spatial location are (0, 1, 2), and the three-dimensional spatial coordinates of the current location of the control board are (0, 0, 2). The control board may determine that the control board needs to move 1 meter in front of the control board. The control board may move through a sliding guide rail.

In another case, the movement information may alternatively explicitly include a movement direction and a movement distance. In this case, the control board may directly adjust a spatial location of the control board based on the movement direction and the movement distance. For example, if the movement direction is moving right, and the movement distance is 10 meters, the control board may directly move right 10 meters to adjust to a corresponding spatial location.

If the movement information includes only the movement distance, the control board may adjust the spatial location of the control board based on the movement distance. In this case, the control board may have a default movement direction (for example, moving right or moving left) in advance. For example, a default movement direction of the control board is moving left. When the movement distance is 8 meters, the control board may directly move left 8 meters to adjust to a corresponding spatial location.

After the control board completes the adjustment, the control board may send location adjustment acknowledgment signaling (acknowledgment, ACK) to the access network device. The location adjustment ACK may include an identifier (EP-ID) of the control board, an identifier (BS-ID) of the access network device, a flag (Flag) indicating whether the adjustment succeeds, and a CRC character. If the flag is True, it indicates that the control board successfully adjusts a location. If the flag is False, it indicates that the control board fails to adjust a location. When the flag is False, the location adjustment ACK may further include current location information (for example, a spatial location and a spatial direction of the control board) of the control board. After receiving the location adjustment ACK from the control board, the access network device may send the location adjustment ACK of the control board to the environment controller, so that the environment controller can summarize and record the location of the control board. It can be learned that, the environment controller may locally store current spatial location information and current spatial direction information, and historical spatial location information and historical spatial direction information of all the control boards. Adjusting the location may be adjusting a spatial location, or may be adjusting a spatial direction, or may be adjusting a spatial direction and a spatial location.

FIG. 7 is a schematic diagram of a frame format of location adjustment acknowledgment signaling according to an embodiment of the present invention. As shown in FIG. 7, when the control board successfully adjusts the location, the location adjustment acknowledgment signaling may include an access network device ID, a control board ID, a flag (Flag), and a CRC character. When the control board fails to adjust the location, the location adjustment acknowledgment signaling may include an access network device ID, a control board ID, a flag (Flag), a current location (that is, a current spatial location), a current orientation (that is, a current angle), and a CRC character. It may be understood that the frame format shown in FIG. 7 is merely an example for description, and constitutes no limitation thereto.

The access network device may monitor quality of service (quality of service, QoS) of the terminal device, and dynamically trigger next propagation environment control (that is, controlling the location of the control board) based on the QoS. For example, when the access network device detects that the QoS of the terminal device is low, that is, when communication quality of the terminal device is poor, the access network device may send a location adjustment request to the environment controller. After receiving the location adjustment request from the access network device, the environment controller may re-determine location information of the control board, and then send the location information to the access network device. After the access network device receives the location information from the environment controller, the access network device may send location adjustment REQ to the control board. Then, when the control board receives the location adjustment REQ sent by the access network device, the control board may adjust the location (a spatial location and a spatial direction) of the control board in a timely manner, to optimize a propagation environment of surrounding space of the control board, improve average transmission quality between the terminal device and the access network device, and improve a throughput of a communication system.

304. The environment controller sends a state pattern of the control board to the access network device.

Correspondingly, the access network device may receive the state pattern of the control board from the environment controller.

The state pattern may include state information, and a state corresponding to the state information may be an absorbing and energy-storing state, an active forwarding state, or a passive forwarding state. The active forwarding (active transmission) state, which may also be referred to as an A state briefly, is a state in which an incident electromagnetic wave is reflected or transmitted after being amplified. When the control board is in the active forwarding state, energy of a local battery of the control board may be used to amplify the incident electromagnetic wave, and then the amplified electromagnetic wave is reflected or transmitted.

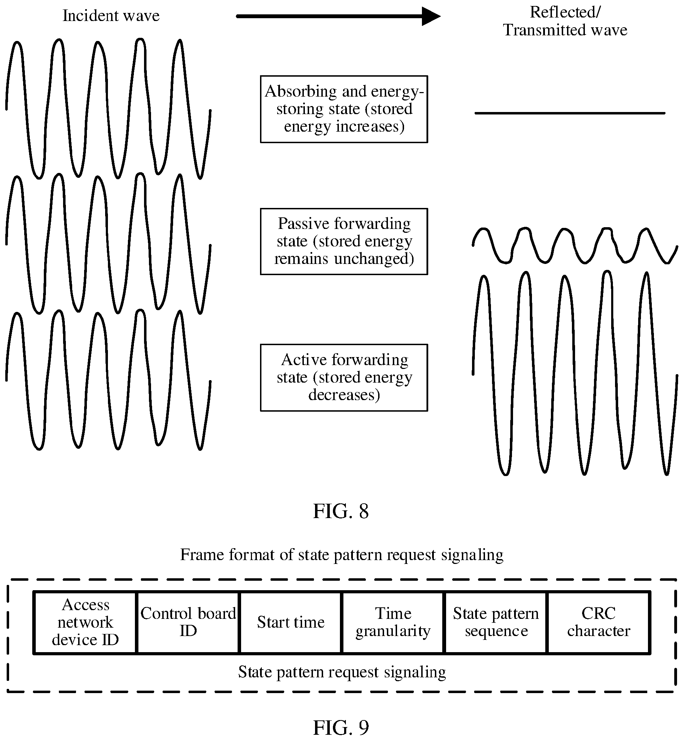

FIG. 8 is a schematic diagram of an incident wave and a reflected/transmitted wave when a control board is in different states according to an embodiment of the present invention. As shown in FIG. 8, when the control board is in an absorbing and energy-storing state, stored energy of the control board increases. In this case, the control board may absorb a capability of an incident electromagnetic wave, convert the incident electromagnetic wave into electric energy, and store the electric energy in a local battery. Therefore, there is no corresponding reflected/transmitted wave in this case. When the control board is in a passive forwarding state, stored energy of the control board remains unchanged. In this case, the control board only passively reflects or transmits an incident electromagnetic wave, neither absorbs energy from a surrounding environment nor releases energy of a local battery to the outside. When the control board is in an active forwarding state, stored energy of the control board decreases (power decreases). The control board may use energy of a local battery to amplify an incident electromagnetic wave and then reflect or transmit the amplified electromagnetic wave. However, the amplified electromagnetic wave has a smaller amplitude than the incident electromagnetic wave, or may have a larger amplitude than the incident electromagnetic wave, and is related to a corresponding amplification multiple. However, the reflected/transmitted wave in the active forwarding state has a larger amplitude than the reflected/transmitted wave in the passive forwarding state. It should be understood that the schematic diagram of the incident wave and the reflected/transmitted wave shown in FIG. 8 is merely an example for description, and constitutes no limitation thereto.

The environment controller may first determine a state pattern of the control board, and then may send the state pattern of the control board to the access network device.

After determining location information, the environment controller may determine the state pattern of the control board corresponding to the location information. The environment controller may determine the state pattern of the control board based on the three-dimensional spatial map and the location information of the control board. Transmission paths and transmission losses of the access network device and the terminal device may vary with the location information of the control board. Therefore, the environment controller may first determine the location information of the control board. After the environment controller determines the location information of the control board, the location (a spatial location and a spatial direction) of the control board may be in a fixed state. In this case, when the control board is in different states, the control board causes different changes to a propagation environment of surrounding space. Signals sent by the access network device to the terminal device may reach the terminal device through different paths, and the signals received by the terminal device may have different power.

For example, as shown in FIG. 4, there may be three paths from a radio electromagnetic wave signal transmitted by the access network device to a terminal device 1 (a robotic arm): $\Omega_{1,1}$ is a line-of-sight (LOS) from the access network device to the terminal device 1, $\Omega_{1,2}$ is a non-line-of-sight (NLOS) from the access network device to the terminal device 1 after being reflected by a control board 4, and $\Omega_{1,3}$ is a non-line-of-sight (NLOS) from the access network device to the terminal device 1 after being reflected by a control board 1. However, if the control board 4 is in the absorbing and energy-storing state (C state), signals on this path $\Omega_{1,2}$ do not reach the terminal device 1, but are absorbed by the control board and converted into electric energy and stored in a local battery. If the control board 4 is in the passive or active forwarding state (P state or A state), signals on this path $\Omega_{1,2}$ may reach the terminal device 1, but the passive forwarding state has a greater loss (more severe attenuation) than the active forwarding state. Therefore, strength of the signals reaching the terminal device 1 is different. Signal strength in the active forwarding state is higher (receive power is higher). Similarly, there may be two paths from a radio electromagnetic wave signal transmitted by the access network device to a terminal device 2 (a mobile phone): $\Omega_{2,1}$ is a line-of-sight from the access network device to the terminal device 2, and is $\Omega_{2,2}$ a non-line-of-sight from the access network device to the terminal device 2 after being reflected by a control board N. When the control board N is separately in the C state, the P state, and the A state, signals reaching the terminal device 2 on this path $\Omega_{2,1}$ may also be different.

The control board may be in any one of the foregoing three states at one moment. Assuming that a time granularity of a state pattern of the control board is $\Delta t$, there may be $(3^{(\frac{T}{\Delta t})})^M$ cases in a time period $T$. The environment controller may determine an indicator such as average communication quality or an average throughput between the access network device and the terminal device in each case. Then, the environment controller may determine, as target state patterns, M state patterns in a case in which the indicator such as the average communication quality or the average throughput is best.

The environment controller may determine the target state pattern in $(3^{(\frac{T}{\Delta t})})^M$ cases by using Formula (8):

$$\max_{S} \bar{R}_{sum} = \frac{1}{T}\int_0^T dt \cdot \sum_{k=1}^K \left[ \sum_{i=1}^{rank(\Omega_k(t))} log_2\left(1 + \gamma_{k,i}(t)\right) \right] \quad (8)$$

S in the foregoing formula is a state pattern set, has $(3^{(\frac{T}{\Delta t})})^M$ cases (values), and may be denoted as S = $\{S_1,\cdots,S_M\}$, where $S_m = [\cdots,C_m(t1),P_m(t2),A_m(t3),\cdots]$, $1 \le m \le M$, and $0 \le t1 < t2 < t3 \le T$. *The state pattern set includes M elements, one of the M elements is $\frac{T}{\Delta t}$ states of a control board in the time period T, and each state may be any one of the three states. Therefore, there are a total of $(3^{(\frac{T}{\Delta t})})^M$ state pattern sets. Formula (8) is similar to Formula (1). For details, refer to related descriptions in step 301. The details are not described herein again. It can be learned that, M state patterns in which $\bar{R}_{sum}$ is largest, that is, state patterns of the selected M control boards, may be determined by using Formula (8), and the M state patterns may maximize an average throughput of the communication system.

After the environment controller determines the state pattern of the control board, the environment controller may send the state pattern to the access network device. A start time of the state pattern may be t0, a time granularity may be $\Delta t$, the state pattern may be represented as S, and the state pattern may also be referred to as a state pattern sequence.

Specifically, the state pattern may be a sequence including three states: an A state, a P state, and a C state, for example, {AAAAAPPC}, or may be a simplified sequence form, for example, {C5P2A1}, or may be a specific state pattern index {Index}.

For example, the state pattern S={ AAAAAPPC} may indicate that the control board is in the A state from a moment t0 to a moment t0+5Δt; the control board is in the P state from the moment t0+5Δt to a moment t0+7Δt; the control board is in the C state from the moment t0+7Δt to a moment t0+8Δt; and the control board may periodically repeat the foregoing state pattern sequence at a moment after t0+8Δt. The state pattern S={AAAAAPPC} may also be represented as a compressed expression S={C5P2A1}, where a character C/P/A represents a state of the control board, and a number following the character represents a quantity of time granularities at which the state lasts. The state pattern is S={Index}, where the index (Index) represents a well-known state pattern agreed in advance by receiving and sending ends (that is, the environment controller and the access network device) by using a standard protocol. For example, an index "1" may represent S={ AAAAAPPC}.

When sending the state pattern, the environment controller may also send identification information of the control board, for example, an ID of the control board. The ID of the control board is in one-to-one correspondence with the state pattern of the control board.

When determining the state pattern, the environment controller does not consider an energy storage value and absorption efficiency of the control board. Therefore, there may be a case in which the determined state pattern is unavailable.

For example, the state pattern determined by the environment controller is S={ AAAAAPPC}. In this case, the control board is in the A state in a long time period, which causes high power consumption of the control board, but power of the control board may be insufficient. Therefore, at a specific moment, the control board may not have enough power to be used when being in the A state. Consequently, the control board cannot effectively and actively forward the incident electromagnetic wave. It can be learned that the energy storage value of the battery of the control board restricts effective duration of the A state in the state pattern. Correspondingly, if S={ CCCCCPAC}, the control board is in the absorbing and energy-storing state (C state) in a long time period, and the control board absorbs energy of a surrounding electromagnetic wave in a long time period, and may convert the absorbed energy into electric energy and store the electric energy in a local battery. However, if the control board initially has high power, the control board may have reached an upper limit of an energy storage value of a local battery in a very short time period. In this case, the control board continues to absorb the energy of the electromagnetic wave, and then converts the energy into electric energy, but cannot store the electric energy in the local battery, thereby causing a waste of electric energy.

To avoid the foregoing case, the environment controller may consider the energy storage value and the absorption efficiency of the control board when determining the state pattern, that is, the environment controller may determine the state pattern of the control board based on the three-dimensional spatial map, the location information of the control board, and the energy storage value and the absorption efficiency of the control board.

Specifically, Formula (8) may be improved, and a function related to the energy storage value and the absorption efficiency of the control board is added to Formula (8). For example, a limitation function may be added, and some cases may be excluded from $(3^{(\frac{T}{\Delta t})})^M$ cases by using the limitation function, that is, a case in which an unavailable state pattern is excluded. It is assumed that the state pattern of the control board is S={ AAAAAPPC}, a time granularity Δt is 5 seconds, the state pattern includes states of the control board in 8Δt, absorption efficiency of the control board at one location is 50%, an energy storage value of the control board is 20%, and a total battery capacity of the control board may be 100 milliampere-hours (mAh). The control board may consume 1 mAh when the control board is in the A state for 5 seconds, and may store energy of 1 mAh when the control board is in the C state for 5 seconds. Therefore, the control board may consume a total of 4 mAh every 40 seconds, and after the state pattern repeats four periods, the energy storage value of the control board may be 0. Therefore, at the beginning of a fifth period, the control board has no power to be used when being in the A state, and consequently cannot effectively and actively forward the incident electromagnetic wave.

The environment controller may determine some unavailable state patterns through calculation, to ensure that the control board can effectively and actively forward the incident electromagnetic wave when using the state pattern.

It may be understood that the environment controller may also determine both the location of the control board and the state pattern of the control board. The environment controller may consider a set L of M locations of the control board and states S of control boards at the M locations, that is, may combine Formula (1) and Formula (8). For details, refer to Formula (9).

$$\max_{L,S} \bar{R}_{sum} = \frac{1}{T}\int_0^T dt \cdot \sum_{k=1}^K \left[ \sum_{i=1}^{rank(\Omega_k(t))} log_2\left(1 + \gamma_{k,i}(t)\right) \right] \quad (9)$$

L and S in the foregoing formula are combined together. When L includes only the spatial location but does not include the spatial direction, there are a total of $C_N^M \cdot (3^{(\frac{T}{\Delta t})})^M$ cases. When L includes both the spatial location and the spatial direction, there are a total of $C_N^M \cdot S^M \cdot (3^{(\frac{T}{\Delta t})})^M$ cases. It may be understood that M locations at which $\overline{R}_{sum}$ is largest and a state pattern of a control board at each location may be determined by using Formula (9).

When separately determining the spatial location of the control board and the state pattern of the control board, the environment controller needs to consider $C_N^M + (3^{(\frac{T}{\Delta t})})^M$ cases, that is, needs to calculate $C_N^M + (3^{(\frac{T}{\Delta t})})^M$ results $\overline{R}_{sum}$. When determining both the spatial location and the state pattern of the control board, the environment controller needs to consider $C_N^M \cdot (3^{(\frac{T}{\Delta t})})^M$ cases. When separately determining a location (the spatial location and the spatial direction) of the control board and the state pattern of the control board, the environment controller needs to consider $C_N^M \cdot S^M + (3^{(\frac{T}{\Delta t})})^M$ cases. When determining both the location and the state pattern of the control board, the environment controller needs to consider $C_N^M \cdot S^M \cdot (3^{(\frac{T}{\Delta t})})^M$ cases. It can be learned that, the environment controller may have a different calculation amount in each case. When determining both the location and the state pattern of the control board, the environment controller may have a large calculation amount, but in this case, may consider $\overline{R}_{sum}$ in more cases. Therefore, the environment controller can obtain a more accurate result (the location and the state pattern).

It may be understood that the environment controller may send both the location information and the state pattern of the control board to the access network device.

305. The access network device sends the state pattern of the control board to the control board.

After the access network device receives the state pattern of the control board from the environment controller, the access network device may send the state pattern to the control board.

The access network may send the location information to the control board by using state pattern request signaling (Request, REQ). The state pattern REQ may include an identifier (BS-ID) of the access network device, an identifier (EP-ID) of the control board, a start time t0, a time granularity $\Delta t$, a state pattern sequence, and a CRC character. FIG. 9 is a schematic diagram of a frame format of state pattern request signaling according to an embodiment of the present invention. It may be understood that the frame format shown in FIG. 9 is merely an example for description, and constitutes no limitation thereto.

After an access network device sends location information and a state pattern to a control board, the control board may correspondingly adjust (configure) a location and the state pattern of the control board based on the location information and the state pattern. Therefore, a wireless propagation environment in which a transmission loss (for example, an average value of large-scale path transmission losses) can be expected may be constructed in a specific space range and a specific time period, so that the access network device can determine channel quality of a terminal device.

The access network device may determine the channel quality of the terminal device based on the three-dimensional spatial map, and the location information and the state pattern of the control board. Then, the access network device may allocate a resource to the terminal device based on the channel quality, and then may send information about the resource to the terminal device. The channel quality may be a signal-to-noise ratio, or may be a transmission loss, reference signal received power (reference signal received power, RSRP), or the like. The resource allocated by the access network device to the terminal device may include an uplink resource and/or a downlink resource.

The access network device may determine average communication quality of terminal devices in a period of time, for example, may determine $\gamma_{k,i}(t)$ in Formula (1). Then, the access network device may use an average signal-to-noise ratio of $rank(\Omega_k(t))$ transmission paths as the average communication quality of the terminal devices. For a manner of determining $\gamma_{k,i}(t)$, refer to the foregoing related descriptions. Details are not described herein again.

The access network device may allocate the resource to the terminal device based on the channel quality. When the channel quality is good, that is, when a signal-to-noise ratio is high, interference of noise to a wanted signal is low. Therefore, a communication bit error rate is low, and a communication receiver can effectively receive data sent by a communication sender. When the channel quality is poor, a communication bit error rate is high, and a communication receiver cannot effectively receive data sent by a sender. Therefore, the access network device may allocate a large quantity of resources to a terminal device with good signal quality (for example, a terminal device whose signal-to-noise ratio is greater than a specific threshold), and may allocate a small quantity of resources to a terminal device with poor signal quality (for example, a terminal device whose signal-to-noise ratio is less than a specific threshold), to avoid a waste of resources and improve resource utilization.

The access network device may send the information about the resource to the terminal device by using time-frequency resource allocation command signaling (command, CMD). The signaling may include an identifier (BS-ID) of the access network device, an identifier (UE-ID) of the terminal device, a time-frequency resource block identifier (resource block ID, RB-ID), and a CRC character. The identifier of the terminal device may be a unique identifier allocated by the access network device to the terminal device in the access network device, and the time-frequency resource block identifier may uniquely identify a time-frequency resource allocated to the terminal device. The time-frequency resource block identifier may be a specific time domain resource and a specific frequency domain resource (for example, a subcarrier), or may be an index corresponding to a time domain resource and a frequency domain resource. After the terminal device receives the time-frequency resource allocation CMD from the access network device, the terminal device may send time-frequency resource allocation acknowledgment signaling (acknowledgment, ACK) to the access network device, where the signaling may include an identifier (UE-ID) of the terminal device, an identifier (BS-ID) of the access network device, a flag (Flag) indicating whether a time-frequency resource is successfully configured, and a CRC character. If the flag is True, it indicates that the terminal device successfully configures the time-frequency resource. If the flag is False, it indicates that the terminal device fails to configure the time-frequency resource. An uplink resource allocation or downlink resource allocation frame format may be a time-frequency resource allocation frame format defined in an existing standard.

The access network device may further determine transmit power based on the channel quality, where the transmit power may include transmit power of the access network device and transmit power of the terminal device.

When the channel quality is good, that is, when a signal-to-noise ratio is high, interference of noise to a wanted signal is low. Therefore, the access network device may send a signal to the terminal device at low transmit power, and may indicate low transmit power to the terminal device, so that average power consumption of the access network device and the terminal device can be reduced. When the channel quality is poor, a communication bit error rate may be high. Therefore, the access network device may send a signal to the terminal device at high transmit power, and may indicate high transmit power to the terminal device, so that the bit error rate can be reduced, and an average throughput of a communication system can be improved.

For example, the access network device may determine the transmit power of the access network device and the transmit power of the terminal device based on a transmission loss. For example, the transmit power of the access network device is determined. It is assumed that receiver sensitivity (minimum receive power) of the terminal device is -100 dBm, a signal sent by the access network device to the terminal device may be attenuated by 45 dB in a transmission process, and a specific attenuation margin (for example, 10 dB) may be considered, so that a larger transmission loss can be tolerated. Therefore, minimum transmit power of the signal sent by the access network device to the terminal device may be -45 dBm. Correspondingly, the access network device may also determine the transmit power of the terminal device based on receiver sensitivity of the access network device.

The access network device may send information about the transmit power of the terminal device to the terminal device by using transmit power allocation command signaling (command, CMD), where the signaling may include an identifier (BS-ID) of the access network device, an identifier (UE-ID) of the terminal device, a power level identifier (power level ID, PL-ID), and a CRC character. The PL-ID may be a specific power value (for example, -20 dBm), or may be a power index (for example, "01"). The power index may correspond to a specific power value. For example, a power value corresponding to "01" may be -25 dBm. After the terminal device receives the transmit power allocation CMD from the access network device, the terminal device may send transmit power allocation acknowledgment signaling (acknowledgment, ACK) to the access network device, where the signaling may include an identifier (UE-ID) of the terminal device, an identifier (BS-ID) of the access network device, a flag (Flag) indicating whether power is successfully configured, and a CRC character. If the flag is True, it indicates that the terminal device successfully configures the power. If the flag is False, it indicates that the terminal device fails to configure the power. A downlink power allocation frame format may be a time-frequency resource allocation frame format defined in an existing standard.

It may be understood that, because the state pattern of the control board is configured in this embodiment of the present invention, when determining the transmit power of the access network device and the transmit power of the terminal device, the access network device may further consider an energy storage value and absorption and energy storage efficiency of the control board, to improve the absorption and energy storage efficiency of the control board. For example, when the control board is in an absorbing and energy-storing state, the access network device may send a signal to the terminal device at high transmit power, so that the control board can absorb more electromagnetic wave energy from a surrounding environment, and can convert the more energy into electric energy and store the electric energy locally, to improve the absorption and energy storage efficiency of the control board.

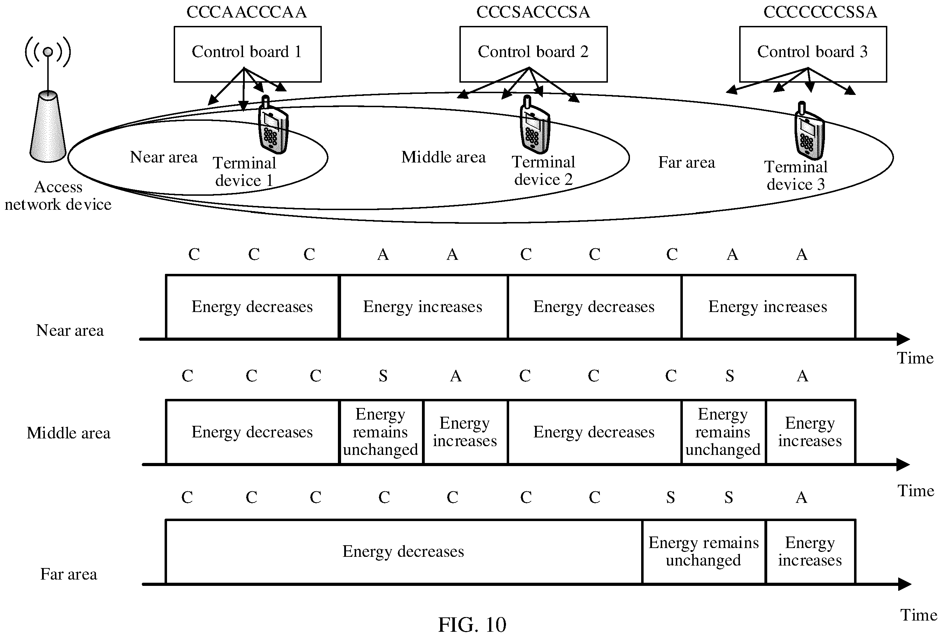

For example, FIG. 10 is a schematic diagram of another scenario according to an embodiment of the present invention. As shown in FIG. 10, it is assumed that a coverage area of the access network device is divided into a near area, a middle area, and a far area based on a distance between the terminal device and the access network device, and the near area of the access network device includes a terminal device 1 and a control board 1, the middle area includes a terminal device 2 and a control board 2, and the far area includes a terminal device 3 and a control board 3. A state pattern of the control board 1 is configured as {CCCAACCCAA}, a state pattern of the control board 2 is configured as {CCCSACCCSA}, and a state pattern of the control board 3 is configured as {CCCCCCCSSA}.

Reflection or transmission performed by the control board on an incident electromagnetic wave may be diffuse reflection or diffuse transmission. The diffuse reflection may enable the incident electromagnetic wave on the control board to have reflected signals with approximately equal energy in all directions, and the diffuse transmission may enable the incident electromagnetic wave on the control board to have transmitted signals with approximately equal energy in all directions.

It can be learned that, in different time periods, under a comprehensive effect of the control board 1, the control board 2, and the control board 3, different impact may be caused on communication between the access network device and the terminal device. It is assumed that one state duration of the state pattern of the control board is one slot.

The control board 1, the control board 2, and the control board 3 are all in a C state in slots 1 to 3. In this case, the control board may absorb an incident electromagnetic wave. Therefore, in the slots 1 to 3, on average, the entire coverage area of the access network device is in an energy-weakened state. In other words, in this case, power of a signal received by the terminal device from the access network device correspondingly decreases compared with power of a signal received by the control board in a passive reflection state. However, because a distance between the terminal device 1 and the access network device is short, original wireless receive power of the terminal device 1 is high. Therefore, a signal-to-noise ratio of a signal that is received by the terminal device 1 and that is sent by the access network device is high. In this way, the slots 1 to 3 may be allocated to the terminal device 1 for communication with the access network device.

In slots 4 to 8, the control board 1 is in an A state in first two slots, and is in a C state in last three slots; the control board 2 is in an S state in the slot 4, is in an A state in the slot 5, and is in a C state in the slots 6 to 8; and the control board 3 is in a C state in the slots 4 to 7, and is in an S state in the slot 8. Therefore, in the slots 4 to 8, on average, the entire coverage area of the access network device is in an energy-unchanged state. In other words, in this case, power of a signal received by the terminal device from the access network device is basically the same as power of a signal received by the control board in a passive reflection state. Because a distance between the terminal device 2 and the access network device is moderate, original wireless receive power of the terminal device 2 is lower than that of the terminal device 1 and higher than that of the terminal device 3. Therefore, a signal-to-noise ratio of a signal that is received by the terminal device 2 and that is sent by the access network device is lower than that of the terminal device 1 and higher than that of the terminal device 3. In this way, the slots 4 to 8 may be allocated to the terminal device 2 for communication with the access network device.

The control board 1 is in an A state in slots 9 and 10; the control board 2 is in an S state in the slot 9, and is in an A state in the slot 10; and the control board 3 is in an S state in the slot 9, and is in an A state in the slot 10. Therefore, in the slots 9 and 10, on average, the entire coverage area of the access network device is in an energy-enhanced state. In other words, in this case, power of a signal received by the terminal device from the access network device correspondingly increases compared with power of a signal received by the control board in a passive reflection state. Because a distance between the terminal device 3 and the access network device is long, original wireless receive power of the terminal device 3 is low. Therefore, a signal-to-noise ratio of a signal that is received by the terminal device 3 and that is sent by the access network device is low. In this way, the slots 9 and 10 may be allocated to the terminal device 3 for communication with the access network device.

The foregoing time-frequency resource allocation manner may be understood as follows: The control board absorbs radio electromagnetic wave energy of the terminal device in the near area and converts the radio electromagnetic wave energy into electric energy of a local battery, and then the control board consumes a capability of the local battery to assist the terminal device in the far area in communication, to enhance a communication capability (a signal-to-noise ratio) of a terminal device in an edge area of the access network device, and improve an average throughput of an entire wireless communication system. It should be understood that the scenario shown in FIG. 10 is merely an example for description, and constitutes no limitation thereto.

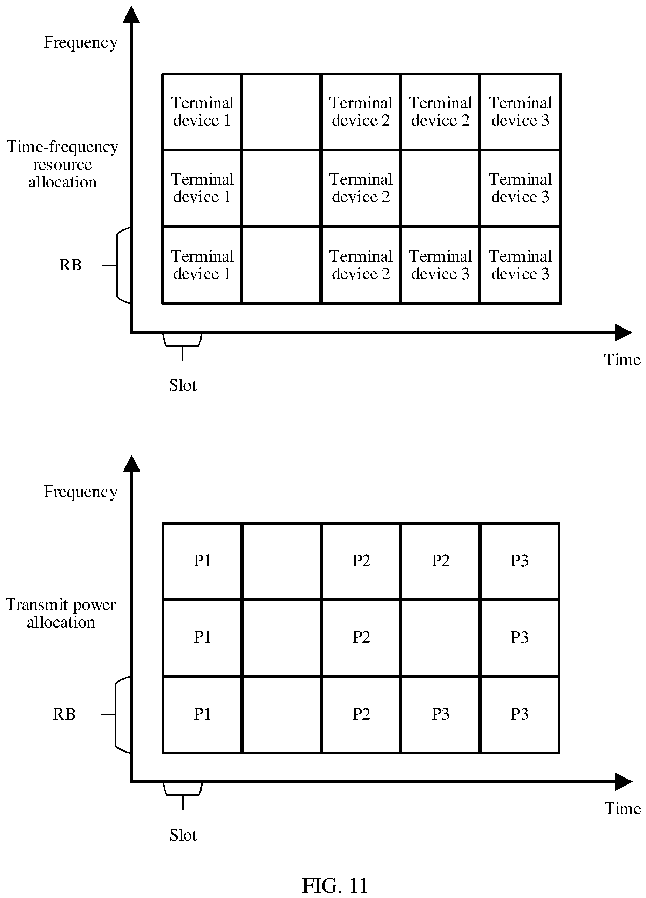

For the propagation environment shown in FIG. 10, an effect of a solution for allocating a group of time-frequency resources and transmit power to the terminal device 1, the terminal device 2, and the terminal device 3 is shown in FIG. 11. FIG. 11 is a schematic diagram of time-frequency resource and transmit power allocation according to an embodiment of the present invention. As shown in FIG. 11, a minimum unit of time domain resource allocation may be two slots, and one slot may include 14 symbols; and a minimum unit of frequency domain resource allocation may be a resource block (resource block, RB), and the RB may refer to 12 consecutive subcarriers in frequency. It can be learned that the access network device may allocate three RBs in slots 1 and 2 to the terminal device 1, may allocate three RBs in slots 5 and 6 to the terminal device 2, may allocate one RB in slots 7 and 8 to the terminal device 2, may allocate one RB in the slots 7 and 8 to the terminal device 3, and may allocate three RBs in slots 9 and 10 to the terminal device 3. In addition, the access network device may further allocate transmit power corresponding to a time-frequency resource to the terminal device. For example, transmit power of the terminal device 1 may be P1, transmit power of the terminal device 2 may be P2, and transmit power of the terminal device 3 may be P3. The terminal device may use different transmit power on different time-frequency resources. P1, P2, and P3 may be determined by the access network device. For details, refer to the foregoing related descriptions.

It should be understood that the time-frequency resource allocation and the transmit power allocation shown in FIG. 11 are merely examples for description, and constitute no limitation thereto.

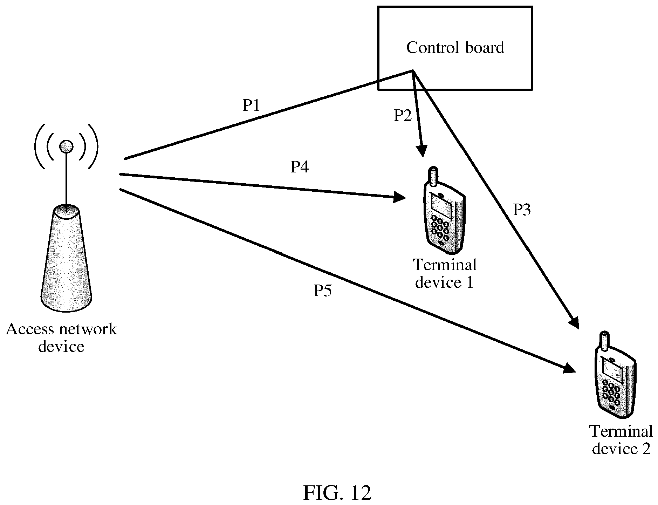

FIG. 12 is a schematic diagram of still another scenario according to an embodiment of the present invention. The scenario shown in FIG. 12 may include an access network device, a terminal device 1, a terminal device 2, and a control board. A signal sent by the access network device to the terminal device 1 may reach the terminal device 1 or the terminal device 2 after being reflected by the control board. It is assumed that a propagation path from the access network device to the control board is denoted as P1, a propagation path from the control board to the terminal device 1 is denoted as P2, a propagation path from the control board to the terminal device 2 is denoted as P3, a propagation path (LOS) from the access network device to the terminal device 1 is denoted as P4, and a propagation path (LOS) from the access network device to the terminal device 2 is denoted as P5. A speed of light may be represented by c, and may be in a unit of meter per second (m/s); a length distance of a propagation path Pn may be represented by a symbol |Pn|, and may be in a unit of meter; and a propagation delay on the path Pn may be represented by a symbol $\tau_n = |Pn|/c$, and may be in a unit of second.

It is assumed that the control board is in a passive reflection state or an active reflection state. At a moment t0, the access network device sends a signal $X_A$ to the terminal device 1, where the signal $X_A$ may reach the terminal device 1 through paths P4 and P1+P2. At a moment t0 + $\tau_4$ and a moment t0 + $\tau_1$ + $\tau_2$, the terminal device 1 may separately receive two signals $X_A$ with same information. Due to a broadcast effect of wireless communication, the signal $X_A$ may also be received (listened to) by the terminal device 2 through paths P5 and P1+P3. In other words, at a moment t0 + $\tau_5$ and a moment t0 + $\tau_1$ + $\tau_3$, the terminal device 2 may separately receive two signals $X_A$ with same information. At a moment t1 = t0 + ΔT, where ΔT represents a continuous sending time of the signal $X_A$, the access network device may send a signal $X_B$ to the terminal device 2. Similarly, the terminal device 2 may receive the signal $X_B$ at a moment t1 + $\tau_5$ and a moment t1 + $\tau_1$ + $\tau_3$, and the terminal device 1 may also receive the signal $X_B$ at a moment t1 + $\tau_4$ and a moment t1 + $\tau_1$ + $\tau_2$.

It can be learned that, if a time interval between t1 + $\tau_5$ and t0 + $\tau_1$ + $\tau_3$ is not greater than ΔT, the signal sent by the access network device to the terminal device 1 causes interference to the signal sent by the access network device to the terminal device 2. In other words, the terminal device 2 may receive both the signal $X_A$ and the signal $X_B$. Therefore, the two signals are superimposed together to generate interference, and when frequencies of the two signals are the same, the terminal device cannot effectively distinguish between the two signals. However, when the control board is in an absorbing and energy-storing state, the control board may absorb a signal of the access network device through the path P1, and convert the signal into electric energy of a local battery of the control board. Therefore, interference caused by the terminal device 1 to the terminal device 2 can be reduced.

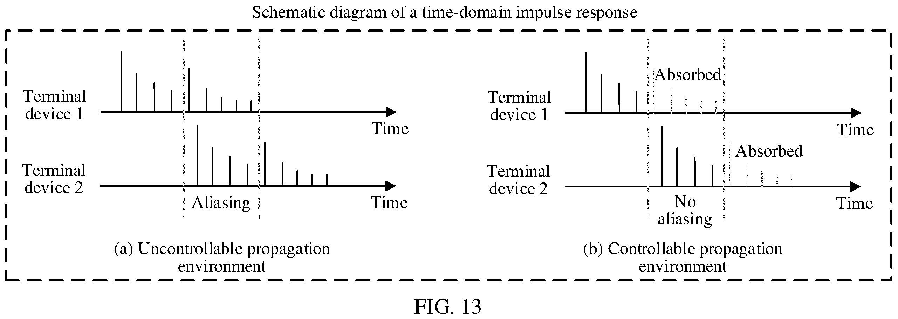

FIG. 13 is a schematic diagram of a time-domain impulse response according to an embodiment of the present invention. As shown in FIG. 13, in an uncontrollable propagation environment, multi-user signal aliasing is generated for a time-domain impulse response of a terminal device 1 and a terminal device 2. In a controllable propagation environment, state switching is performed on a control board between a C state, a P state, and an A state in a proper time interval. In this way, the control board can absorb energy of an original reflection path and converts the energy into electric energy of a local battery of the control board, to reduce or even eliminate multi-user signal aliasing in time domain.

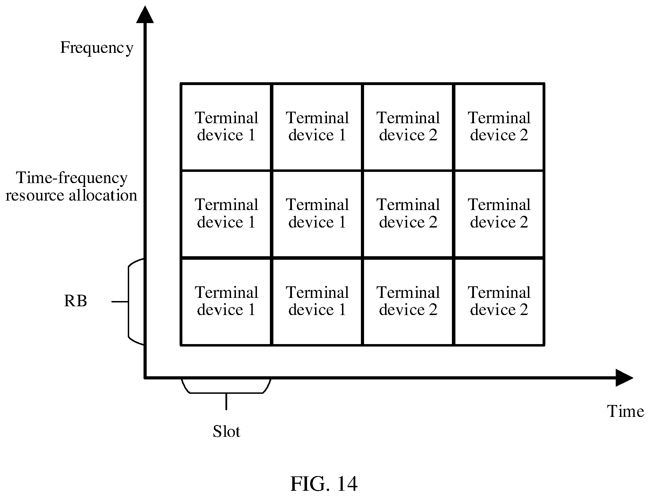

It can be learned that when allocating a time-frequency resource to the terminal device, the access network device may consider a state pattern of the control board. When the control board is in an absorbing and energy-storing state, same-frequency different-time resources (that is, a same frequency domain resource and different time domain resources) are allocated to different terminal devices, and crosstalk between same-frequency different-time terminal devices is reduced by using the control board. FIG. 14 is a schematic diagram of time-frequency resource allocation according to an embodiment of the present invention. As shown in FIG. 14, a minimum unit of time domain resource allocation may be one slot, one slot may include 14 symbols, and a minimum unit of frequency domain resource allocation may be an RB. The access network device may allocate three RBs in slots 1 and 2 to the terminal device 1, and may allocate three RBs in slots 3 and 4 to the terminal device 2. When the terminal device sends a signal to the access network device on the resource or the terminal device receives a signal from the access network device on the resource, and the signal reaches the control board, the signal may be absorbed by the control board, so that signal aliasing between the terminal devices can be reduced or eliminated, and a signal to interference plus noise ratio (signal to interference plus noise ratio, SINR) of the terminal device can be improved. It should be understood that the scenario shown in FIG. 11 and the time-frequency resource allocation shown in FIG. 14 are merely examples for description, and constitute no limitation thereto.

It may be understood that the access network device may send both the location information and the state pattern of the control board to the control board. Alternatively, the access network device may send both the information about the resource and the transmit power to the terminal device.

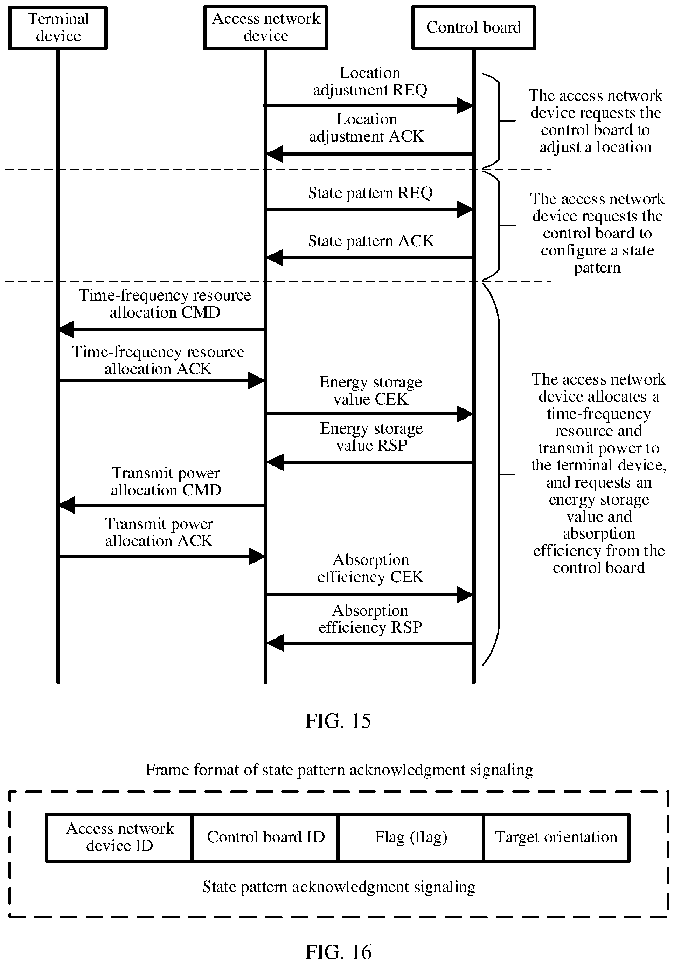

FIG. 15 is a schematic diagram of signaling exchange between a terminal device, an access network device, and a control board according to an embodiment of the present invention. As shown in FIG. 15, the access network device may request the control board to adjust a location. First, the access network device may send location adjustment REQ to the control board. Then, the control board may adjust the location of the control board based on the location adjustment REQ. After the location of the control board is adjusted, the control board may feed back location adjustment ACK to a base station.

The access network device may request the control board to configure a state pattern. First, the access network device may send state pattern REQ to the control board. Then, the control board may adjust a state of the control board based on the state pattern REQ, that is, enables metamaterial panels of the control board to switch regularly between a C state, a P state, and an A state as a whole. After the state pattern of the control board is configured, the control board may feed back state pattern ACK to the access network device.

The access network device may allocate a time-frequency resource and transmit power to the terminal device. First, the access network device may send time-frequency resource allocation CMD to the terminal device, and the terminal device may feed back time-frequency resource allocation ACK to the access network device. Then, the access network device may send energy storage value CEK to the control board, and the control board may feed back energy storage value RSP to the access network device, where the energy storage value RSP may carry current energy storage value information of a local battery of the control board. Next, the access network device may send transmit power allocation CMD to the terminal device, and the terminal device may feed back transmit power allocation ACK to the access network device. Finally, the access network device may send absorption efficiency CEK (which may be triggered by a periodic timer or an aperiodic event) to the control board, and the control board may feed back absorption efficiency RSP to the access network device.

It should be understood that the flowchart shown in FIG. 15 is merely an example for description, and constitutes no limitation thereto. A sequence of the four pairs of signaling: time-frequency resource allocation (CMD/ACK), energy storage value (CEK/RSP), transmit power allocation (CMD/ACK), and absorption efficiency (CEK/RSP) is not fixed, and may be flexibly adjusted based on an actual situation of a system.

306. The control board adjusts a state of the control board based on the state pattern.

After receiving the state pattern from the access network device, the control board may adjust the state of the control board based on the state pattern.

The control board may receive the state pattern by using the state pattern REQ from the access network device. The state pattern REQ may include an identifier (for example, an EP-ID) of the control board, a start time t0, a time granularity $\Delta t$, a state pattern sequence, and the like. The control board may determine, based on the identifier of the control board, whether the state pattern REQ is sent to the control board.

When the control board determines that the state pattern REQ is sent to the control board, the control board may determine the start time t0, the time granularity $\Delta t$, and the state pattern sequence.

The control board may configure the state pattern sequence, and then may adjust the state of the control board based on the state pattern sequence. For example, the state pattern sequence is {AAAAAPPC}. The control board may adjust the state of the control board to an A state from a moment t0 to a moment t0+5$\Delta t$; the control board may adjust the state of the control board to a P state from the moment t0+5$\Delta t$ to a moment t0+7$\Delta t$; and the control board may adjust the state of the control board to a C state from the moment t0+7$\Delta t$ to a moment t0+8$\Delta t$. At a moment after t0+8$\Delta t$, the control board may periodically repeat the foregoing state pattern until a new state pattern is received.

After the control board configures the state pattern, the control board may send (feed back) state pattern response signaling (ACK) to the access network device, where the signaling may include an identifier (EP-ID) of the control board, an identifier (BS-ID) of the access network device, a flag (Flag) indicating whether the state pattern is successfully configured, and a CRC character. If the flag is True, it indicates that the state pattern of the control board is successfully configured. If the flag is False, it indicates that the state pattern of the control board fails to be configured. FIG. 16 is a schematic diagram of a frame format of state pattern acknowledgment signaling according to an embodiment of the present invention. It should be understood that the frame format shown in FIG. 16 is merely an example for description, and constitutes no limitation thereto. Correspondingly, an access network device may receive a state pattern ACK from a control board, and then may send the state pattern ACK of the control board to an environment controller, so that the environment controller can summarize and record state patterns of the control board. It can be learned that, the environment controller may locally store information about current state patterns and information about historical state patterns of all control boards.

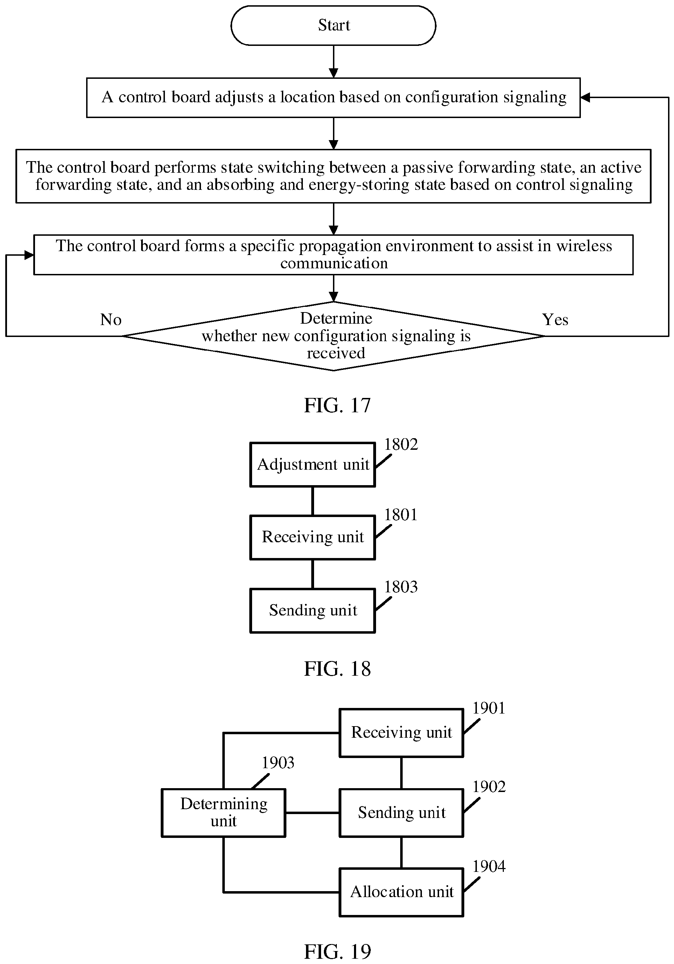

FIG. 17 is a flowchart of adjusting a location and a state of a control board according to an embodiment of the present invention. As shown in FIG. 17, the control board may adjust the location based on configuration signaling (that is, the foregoing location adjustment REQ), and may perform state switching between a passive forwarding state, an active forwarding state, and an absorbing and energy-storing state based on control signaling (that is, the foregoing state pattern REQ). Then, the control board may form a specific propagation environment to assist a terminal device in communication, and improve an average throughput of a communication system. Then, when receiving new configuration signaling, an environment controller may re-adjust a location and a state pattern of the control board. It should be understood that the flowchart shown in FIG. 16 is merely an example for description, and constitutes no limitation thereto.

In this embodiment of the present invention, the environment controller determines location information and a state pattern of the control board through calculation, and then an access network device sends the location information and the state pattern to the control board, so that the control board adjusts the location and the state of the control board. When determining the location information and the state pattern, the environment controller considers maximizing indicators such as an average communication rate and an average throughput of the communication system. Therefore, a propagation environment optimized by the control board may maximize the average throughput of the communication system.

Based on the foregoing network architecture, FIG. 18 is a schematic diagram of a structure of a communication apparatus according to an embodiment of the present invention. The communication apparatus may be a control board or a module in the control board. As shown in FIG. 18, the communication apparatus may include:

a receiving unit 1801, configured to receive location information from an access network device, where the location information includes rotation information and/or movement information; and

an adjustment unit 1802, configured to adjust a location of the control board based on the location information, where the receiving unit 1801 is further configured to receive a state pattern from the access network device; and

the adjustment unit 1802 is further configured to adjust a state of the control board based on the state pattern.

In an embodiment, that the adjustment unit 1802 adjusts a location of the control board based on the location information includes:

adjusting a spatial direction of the control board based on the rotation information, and/or adjusting a spatial location of the control board based on the movement information.

In an embodiment, the rotation information includes a rotation direction and a rotation angle, and that the adjustment unit 1802 adjusts a location of the control board based on the location information includes:

adjusting the spatial direction of the control board based on the rotation direction and the rotation angle.

In an embodiment, the rotation information includes a rotation angle, and that the adjustment unit 1802 adjusts a location of the control board based on the location information includes:

adjusting the spatial direction of the control board based on the rotation angle.

In an embodiment, the movement information includes a movement direction and a movement distance, and that the adjustment unit 1802 adjusts a location of the control board based on the location information includes:

adjusting the spatial location of the control board based on the movement direction and the movement distance.

In an embodiment, the movement information includes a movement distance, and that the adjustment unit 1802 adjusts a location of the control board based on the location information includes:

adjusting the spatial location of the control board based on the movement distance.

In an embodiment, the communication apparatus may further include:

a sending unit 1803, configured to send an energy storage value and absorption efficiency to the access network device.

In an embodiment, the receiving unit 1801 is further configured to receive a first request from the access network device, where the first request is used to request the energy storage value and the absorption efficiency.

For more detailed descriptions of the receiving unit 1801, the adjustment unit 1802, and the sending unit 1803, directly refer to related descriptions of the control board in the method embodiment shown in FIG. 3. Details are not described herein again.

Based on the foregoing network architecture, FIG. 19 is a schematic diagram of a structure of another communication apparatus according to an embodiment of the present invention. The communication apparatus may be an access network device or a module in the access network device. As shown in FIG. 19, the communication apparatus may include:

a receiving unit 1901, configured to receive location information of a control board from an environment controller, where the location information includes rotation information and/or movement information; and

a sending unit 1902, configured to send the location information to the control board, where

the receiving unit 1901 is further configured to receive a state pattern of the control board from the environment controller, where the state pattern includes state information, and a state corresponding to the state information is an absorbing and energy-storing state, an active forwarding state, or a passive forwarding state; and

the sending unit 1902 is further configured to send the state pattern to the control board.

In an embodiment, the rotation information includes a rotation direction and a rotation angle.

In an embodiment, the rotation information includes a rotation angle.

In an embodiment, the movement information includes a movement direction and a movement distance.

In an embodiment, the movement information includes a movement distance.

In an embodiment, the sending unit 1902 is further configured to send an energy storage value and absorption efficiency of the control board to the environment controller.

In an embodiment, the receiving unit 1901 is further configured to receive a second request from the environment controller, where the second request is used to obtain the energy storage value and the absorption efficiency of the control board.

In an embodiment, the receiving unit 1901 is further configured to receive the energy storage value and the absorption efficiency from the control board.

In an embodiment, the sending unit 1902 is further configured to send a first request to the control board, where the first request is used to request the energy storage value and the absorption efficiency of the control board.

In an embodiment, the communication apparatus may further include:

a determining unit 1903, configured to determine channel quality of a terminal device based on a three-dimensional spatial map, and the location information and the state pattern of the control board, where the three-dimensional spatial map includes building structure information, location information and material information of a stationary device, communication service model information of the stationary device, and deployment information of the access network device; and

an allocation unit 1904, configured to allocate a resource to the terminal device based on the channel quality, where the sending unit 1902 is further configured to send information about the resource to the terminal device.

In an embodiment, the determining unit 1903 is further configured to determine the channel quality of the terminal device based on the three-dimensional spatial map, and the location information and the state pattern of the control board;

the determining unit 1903 is further configured to determine transmit power based on the channel quality; and

the sending unit 1902 is further configured to send the transmit power to the terminal device.

In an embodiment, the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

For more detailed descriptions of the receiving unit 1901, the sending unit 1902, the determining unit 1903, and the allocation unit 1904, directly refer to related descriptions of the access network device in the method embodiment shown in FIG. 3. Details are not described herein again.

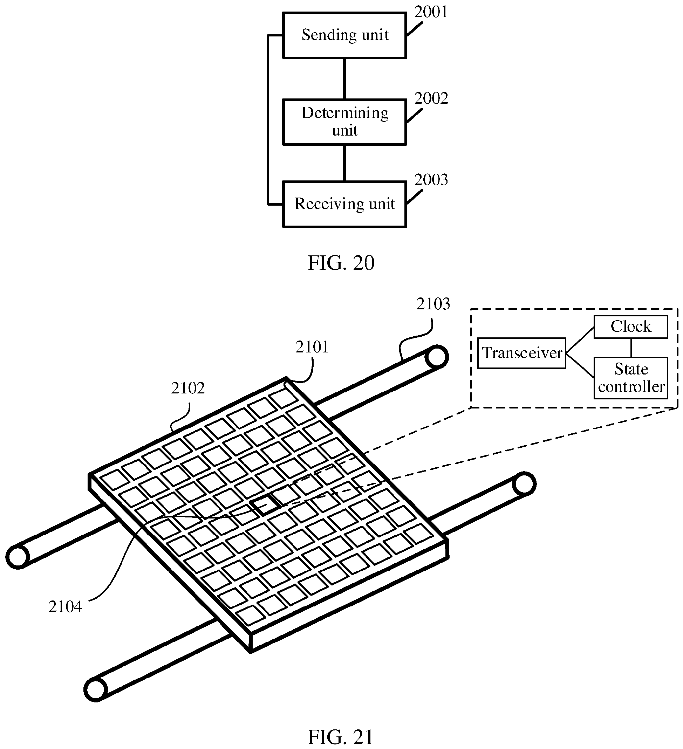

Based on the foregoing network architecture, FIG. 20 is a schematic diagram of a structure of still another communication apparatus according to an embodiment of the present invention. The communication apparatus may be an environment controller or a module in the environment controller. As shown in FIG. 20, the communication apparatus may include:

a sending unit 2001, configured to send location information of a control board to an access network device, where the location information includes rotation information and/or movement information, where

the sending unit 2001 is further configured to send a state pattern of the control board to the access network device, where the state pattern includes state information, and a state corresponding to the state information is an absorbing and energy-storing state, an active forwarding state, or a passive forwarding state.

In an embodiment, the rotation information includes a rotation direction and a rotation angle.

In an embodiment, the rotation information includes a rotation angle.

In an embodiment, the movement information includes a movement direction and a movement distance.

In an embodiment, the movement information includes a movement distance.

In an embodiment, the communication apparatus may further include:

a determining unit 2002, configured to determine the location information of the control board.

In an embodiment, that the determining unit 2002 determines the location information of the control board includes: determining the location information of the control board based on a three-dimensional spatial map, where the three-dimensional spatial map includes building structure information, location information and material information of a stationary device, communication service model information of the stationary device, and deployment information of the access network device.

In an embodiment, that the determining unit 2002 determines the location information of the control board includes: determining the location information of the control board based on a three-dimensional spatial map, and an energy storage value and absorption efficiency of the control board, where the three-dimensional spatial map includes building structure information, location information and material information of a stationary device, communication service model information of the stationary device, and deployment information of the access network device.

In an embodiment, the communication apparatus may further include:

a receiving unit 2003, configured to receive the energy storage value and the absorption efficiency of the control board from the access network device.

In an embodiment, the sending unit 2001 is further configured to send a second request to the access network device, where the second request is used to obtain the energy storage value and the absorption efficiency of the control board.

In an embodiment, the determining unit 2002 is further configured to determine the state pattern of the control board.

In an embodiment, that the determining unit 2002 determines the state pattern of the control board includes: determining the state pattern of the control board based on the three-dimensional spatial map and the location information of the control board.

In an embodiment, that the determining unit 2002 determines the state pattern of the control board includes: determining the state pattern of the control board based on the three-dimensional spatial map, the location information of the control board, and the energy storage value and the absorption efficiency of the control board.

In an embodiment, the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

For more detailed descriptions of the sending unit 2001, the determining unit 2002, and the receiving unit 2003, directly refer to related descriptions of the environment controller in the method embodiment shown in FIG. 3. Details are not described herein again.

Based on the foregoing network architecture, FIG. 21 is a schematic diagram of a structure of still another communication apparatus according to an embodiment of the present invention. The communication apparatus may be a control apparatus. As shown in FIG. 21, the communication apparatus may include a control board 2102 including a plurality of metamaterial units 2101, a sliding track 2103, an analog circuit corresponding to the metamaterial unit 2101, and a wireless transceiver 2104.

A quantity of metamaterial units 2101 on the control board 2102 may vary with an application scenario, and the metamaterial unit 2101 may be rotated, so that an angle or a direction of the control board may be changed. The sliding track 2103 may include a motor and a mechanical gear, to implement spatial location movement of the control board. The wireless transceiver 2104 may include a battery, a clock, and a state controller, and the wireless transceiver may be configured to communicate with another communications device (an access network device or an environment controller). The state controller may be configured to control a state of the metamaterial unit 2101 on the control board 2102, so that the metamaterial unit 2101 is switched between three states: a passive forwarding state (P state), an active forwarding state (A state), and an absorbing and energy-storing state (C state). The analog circuit corresponding to the metamaterial unit may include a phase-shift circuit (phase-shift module), an amplitude modulation circuit (amplitude modulation module), an absorption and energy storage circuit (absorption and energy storage module), and state switches K1 and K2. Each metamaterial unit may have a corresponding analog circuit, and analog circuits corresponding to the metamaterial units may be the same. K1 and K2 may be physical switches or virtual switches.

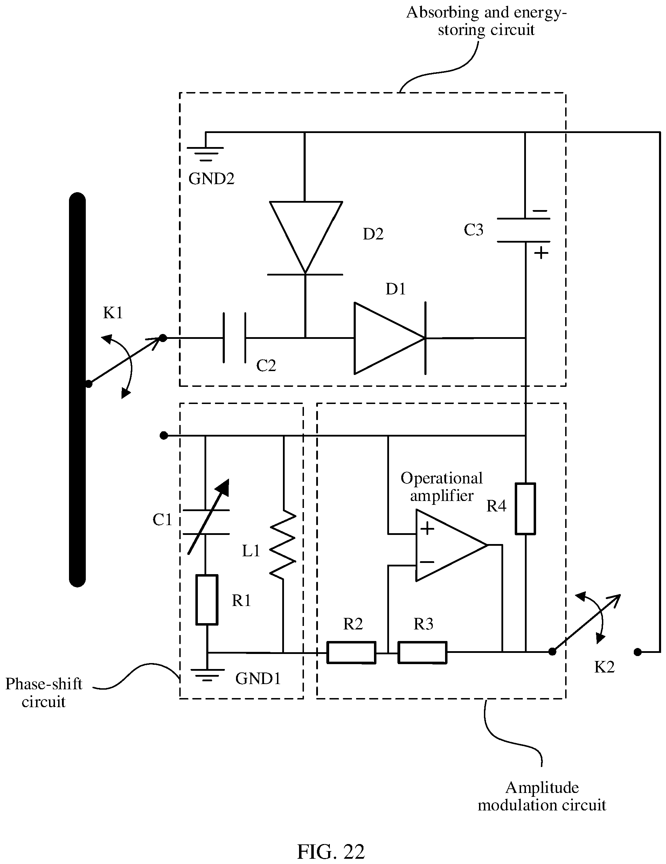

FIG. 22 is a schematic diagram of an analog circuit according to an embodiment of the present invention. As shown in FIG. 22, the analog circuit may include an absorption and energy storage circuit, a phase-shift circuit, and an amplitude modulation circuit. The amplitude modulation circuit is electrically connected to each of the phase-shift circuit and the absorption and energy storage circuit. The phase-shift circuit may include a variable capacitor C1, a resistor R1, and an inductor L1. A phase of an incident electromagnetic wave may be changed differently by controlling a capacitance change of the variable capacitor C1. The amplitude modulation circuit may include a resistor R2, a resistor R3, a resistor R4, and an operational amplifier (that is, an operational amplifier). The amplitude modulation circuit may amplify and forward an incident electromagnetic wave. The absorption and energy storage circuit may include a capacitor C2, a diode D1, a diode D2, and a capacitor C3. The absorption and energy storage circuit may absorb an incident electromagnetic wave, convert the incident electromagnetic wave into electric energy, and store the electric energy in a local battery. It should be noted that, states of all the metamaterial units 2101 on the control board 2102 may be uniformly adjusted, that is, the metamaterial units 2101 may uniformly perform a process of switching between the C state, the P state, and the A state. Therefore, processing complexity and average system power consumption of the control board can be reduced.

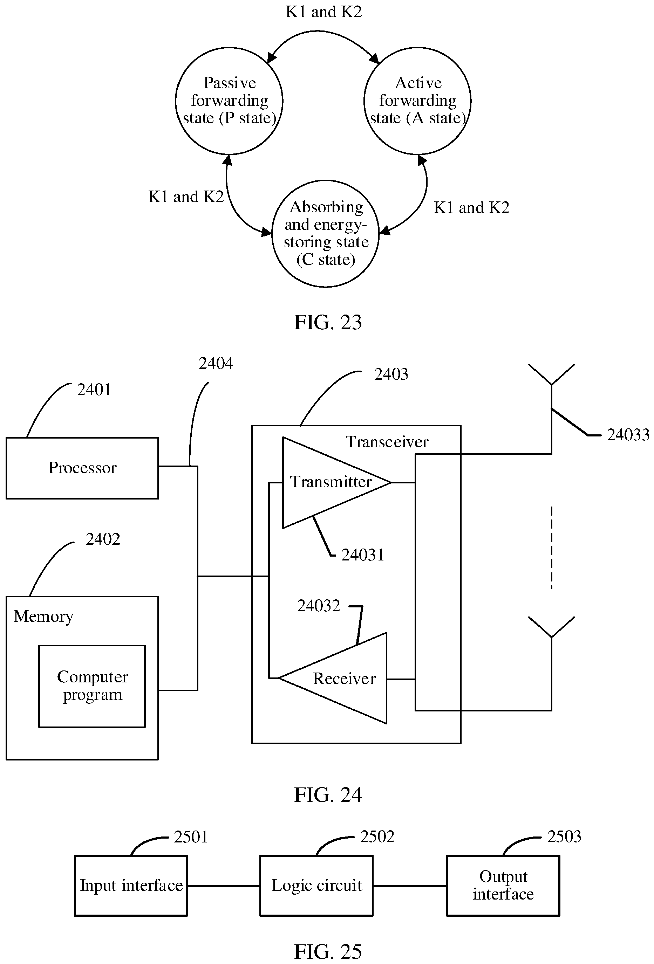

The control board may adjust switches K1 and K2 of the control board in different time periods based on a state pattern, so that the metamaterial panels 2102 change regularly between the C state, the P state, and the A state as a whole. K1 and K2 are upward, so that the control board can be in the absorbing and energy-storing state; K1 is downward and K2 is upward, so that the control board can be in the passive forwarding state; and K1 is downward and K2 is upward, so that the control board can be in the active forwarding state. That K1 or K2 is upward or downward does not refer to an on/off state physically, but refer to state switching virtually. FIG. 23 is a schematic diagram of state switching of a control board according to an embodiment of the present invention. As shown in FIG. 23, the control board may change a state of the control board by adjusting switches K1 and K2.

Based on the foregoing network architecture, FIG. 24 is a schematic diagram of a structure of still another communication apparatus according to an embodiment of the present invention. As shown in FIG. 24, the communication apparatus may include a processor 2401, a memory 2402, a transceiver 2403, and a bus 2404. The memory 2402 may exist independently, and may be connected to the processor 2401 through the bus 2404. Alternatively, the memory 2402 may be integrated with the processor 2401. The bus 2404 is configured to implement a connection between these components. In a case, as shown in FIG. 15, the transceiver 2403 may include a transmitter 24031, a receiver 24032, and an antenna 24033. In another case, the transceiver 2403 may include a transmitter (namely, an output interface) and a receiver (namely, an input interface). The transmitter may include a transmitter machine and an antenna, and the receiver may include a receiver machine and an antenna.

In an embodiment, the communication apparatus may be a control board or a module (for example, a chip) in the control board. When a computer program stored in the memory 2402 is executed, the processor 2401 is configured to control the receiving unit 1801 and the sending unit 1803 to perform the operations performed in the foregoing embodiment. The processor 2401 is further configured to perform the operations performed by the adjustment unit 1802. The transceiver 2403 is configured to perform the operations performed by the sending unit 1803 and the receiving unit 1801 in the foregoing embodiment. The control board or the module in the control board may be further configured to perform the method performed by the control board in the method embodiment in FIG. 3. Details are not described herein again.

In an embodiment, the communication apparatus may be an access network device or a module (for example, a chip) in an access network device. When a computer program stored in the memory 2402 is executed, the processor 2401 is configured to control the receiving unit 1901 and the sending unit 1902 to perform the operations performed in the foregoing embodiment. The processor 2401 is further configured to perform the operations performed by the determining unit 1903 and the allocation unit 1904. The transceiver 2403 is configured to perform the operations performed by the receiving unit 1901 and the sending unit 1902 in the foregoing embodiment. The access network device or the module in the access network device may be further configured to perform the method performed by the access network device in the method embodiment in FIG. 3. Details are not described herein again.

In an embodiment, the communication apparatus may be an environment controller or a module (for example, a chip) in the environment controller. When a computer program stored in the memory 2402 is executed, the processor 2401 is configured to control the sending unit 2001 and the receiving unit 2003 to perform the operations performed in the foregoing embodiment. The processor 2401 is further configured to perform the operations performed by the determining unit 2002. The transceiver 2403 is configured to perform the operations performed by the sending unit 2001 and the receiving unit 2003 in the foregoing embodiment. The environment controller or the module in the environment controller may be further configured to perform the method performed by the environment controller in the method embodiment in FIG. 3. Details are not described herein again.

Based on the foregoing network architecture, FIG. 25 is a schematic diagram of a structure of still another communication apparatus according to an embodiment of the present invention. As shown in FIG. 25, the communication apparatus may include an input interface 2501, a logic circuit 2502, and an output interface 2503. The input interface 2501 is connected to the output interface 2503 through the logic circuit 2502. The input interface 2501 is configured to receive information from another communication apparatus, and the output interface 2503 is configured to: output, schedule, or send information to the another communication apparatus. The logic circuit 2502 is configured to perform an operation other than the operations of the input interface 2501 and the output interface 2503, for example, implement functions implemented by the processor 2401 in the foregoing embodiment. The communication apparatus may be a control board or a module in the control board, or may be an access network device or a module in the access network device, or may be an environment controller or a module in the environment controller. For more detailed descriptions of the input interface 2501, the logic circuit 2502, and the output interface 2503, directly refer to related descriptions of the control board, the access network device, or the environment controller in the foregoing method embodiment. Details are not described herein again.

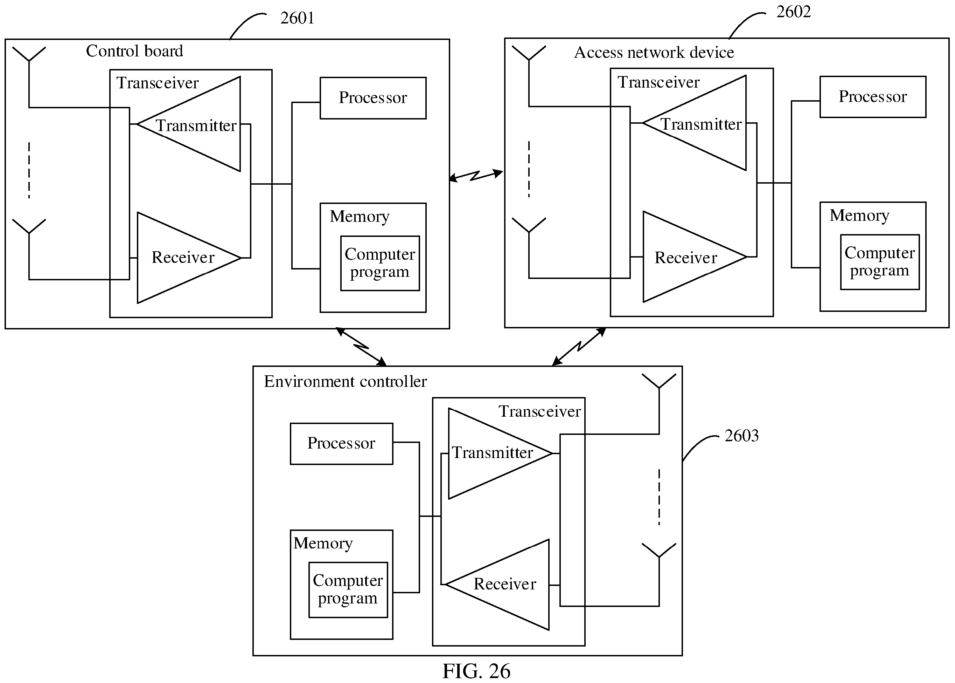

Based on the foregoing network architecture, FIG. 26 is a schematic diagram of a structure of a communication system according to an embodiment of the present invention. As shown in FIG. 26, the communication system may include a control board 2601, an access network device 2602, and an environment controller 2603. For detailed descriptions, refer to the communication method shown in FIG. 3.

An embodiment of the present invention further discloses a computer-readable storage medium. The computer-readable storage medium stores instructions, and when the instructions are executed, the method in the foregoing method embodiment is performed.

An embodiment of the present invention further discloses a computer program product including instructions. When the instructions are executed, the method in the foregoing method embodiment is performed.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

**Claims**

1. A communication method, comprising:

   receiving location information from an access network device, wherein the location information comprises rotation information and/or movement information;
   adjusting a location of a control board based on the location information;
   receiving a state pattern from the access network device; and
   adjusting a state of the control board based on the state pattern.

2. The method according to claim 1, wherein the adjusting a location of a control board based on the location information comprises:
   adjusting a spatial direction of the control board based on the rotation information, and/or adjusting a spatial location of the control board based on the movement information.

3. The method according to claim 1 or 2, wherein the method further comprises:
   sending an energy storage value and absorption efficiency to the access network device.

4. The method according to claim 3, wherein the method further comprises:
   receiving a first request from the access network device, wherein the first request is used to request the energy storage value and the absorption efficiency.

5. A communication method, comprising:

   receiving location information of a control board from an environment controller, wherein the location information comprises rotation information and/or movement information;
   sending the location information to the control board;
   receiving a state pattern of the control board from the environment controller, wherein the state pattern comprises state information, and a state corresponding to the state information is an absorbing and energy-storing state, an active forwarding state, or a passive forwarding state; and
   sending the state pattern to the control board.

6. The method according to claim 5, wherein the method further comprises:
   sending an energy storage value and absorption efficiency of the control board to the environment controller.

7. The method according to claim 6, wherein the method further comprises:
   receiving a second request from the environment controller, wherein the second request is used to obtain the energy storage value and the absorption efficiency of the control board.

8. The method according to claim 6 or 7, wherein the method further comprises:
   receiving the energy storage value and the absorption efficiency from the control board.

9. The method according to claim 8, wherein the method further comprises:
   sending a first request to the control board, wherein the first request is used to request the energy storage value and the absorption efficiency of the control board.

10. The method according to any one of claims 5 to 9, wherein the method further comprises:

   determining channel quality of a terminal device based on a three-dimensional spatial map, and the location information and the state pattern of the control board, wherein the three-dimensional spatial map comprises building structure information, location information and material information of a stationary device, communication service model information of the stationary device, and deployment information of an access network device;

allocating a resource to the terminal device based on the channel quality; and
sending information about the resource to the terminal device.

11. The method according to any one of claims 5 to 10, wherein the method further comprises:

determining the channel quality of the terminal device based on the three-dimensional spatial map, and the location information and the state pattern of the control board;
determining transmit power based on the channel quality; and
sending the transmit power to the terminal device.

12. A communication method, comprising:

sending location information of a control board to an access network device, wherein the location information comprises rotation information and/or movement information; and
sending a state pattern of the control board to the access network device, wherein the state pattern comprises state information, and a state corresponding to the state information is an absorbing and energy-storing state, an active forwarding state, or a passive forwarding state.

13. The method according to claim 12, wherein the method further comprises:
determining the location information of the control board.

14. The method according to claim 13, wherein the determining the location information of the control board comprises:
determining the location information of the control board based on a three-dimensional spatial map, wherein the three-dimensional spatial map comprises building structure information, location information and material information of a stationary device, communication service model information of the stationary device, and deployment information of the access network device.

15. The method according to claim 13, wherein the determining the location information of the control board comprises:
determining the location information of the control board based on a three-dimensional spatial map, and an energy storage value and absorption efficiency of the control board, wherein the three-dimensional spatial map comprises building structure information, location information and material information of a stationary device, communication service model information of the stationary device, and deployment information of the access network device.

16. The method according to claim 15, wherein the method further comprises:
receiving the energy storage value and the absorption efficiency of the control board from the access network device.

17. The method according to claim 16, wherein the method further comprises:
sending a second request to the access network device, wherein the second request is used to obtain the energy storage value and the absorption efficiency of the control board.

18. The method according to any one of claims 12 to 17, wherein the method further comprises:
determining the state pattern of the control board.

19. The method according to claim 18, wherein the determining the state pattern of the control board comprises:
determining the state pattern of the control board based on the three-dimensional spatial map and the location information of the control board.

20. The method according to claim 18, wherein the determining the state pattern of the control board comprises:
determining the state pattern of the control board based on the three-dimensional spatial map, the location information of the control board, and the energy storage value and the absorption efficiency of the control board.

21. The method according to any one of claims 1 to 20, wherein the rotation information comprises a rotation direction and a rotation angle.

22. The method according to any one of claims 1 to 21, wherein the movement information comprises a movement direction and a movement distance.

23. The method according to any one of claims 5 to 22, wherein the absorbing and energy-storing state is a state in which an absorbed electromagnetic wave is converted into electric energy and stored, the active forwarding state is a state in which an incident electromagnetic wave is reflected or transmitted after being amplified, and the passive forwarding state is a state in which an incident electromagnetic wave is reflected or transmitted.

24. A communication apparatus, comprising:

a receiving unit, configured to receive location information from an access network device, wherein the location information comprises rotation information and/or movement information; and
an adjustment unit, configured to adjust a location of a control board based on the location information, wherein the receiving unit is further configured to receive a state pattern from the access network device; and
the adjustment unit is further configured to adjust a state of the control board based on the state pattern.

25. A communication apparatus, comprising:

a receiving unit, configured to receive location information of a control board from an environment controller, wherein the location information comprises rotation information and/or movement information; and
a sending unit, configured to send the location information to the control board, wherein
the receiving unit is further configured to receive a state pattern of the control board from the environment controller, wherein the state pattern comprises state information, and a state corresponding to the state information is an absorbing and energy-storing state, an active forwarding state, or a passive forwarding state; and
the sending unit is further configured to send the state pattern to the control board.

26. A communication apparatus, comprising:

a sending unit, configured to send location information of a control board to an access network device, wherein the location information comprises rotation information and/or movement information, wherein
the sending unit is further configured to send a state pattern of the control board to the access network device, wherein the state pattern comprises state information, and a state corresponding to the state information is an absorbing and energy-storing state, an active forwarding state, or a passive forwarding state.

27. A communication apparatus, comprising a processor and a memory, wherein the processor invokes a computer program stored in the memory to implement the method according to any one of claims 1 to 23.

28. The communication apparatus according to claim 27, wherein the communication apparatus further comprises a transceiver, the transceiver is configured to: receive information from a communication apparatus other than the communication apparatus, and output information to the communication apparatus other than the communication apparatus.

29. A computer-readable storage medium, wherein the computer-readable storage medium stores a computer program or computer instructions, and when the computer program or the computer instructions are run, the method according to any one of claims 1 to 23 is implemented.

30. A computer program product, wherein the computer program product comprises computer program code, and when the computer program code is run, the method according to any one of claims 1 to 23 is implemented.

31. A communication system, wherein the communication system comprises a control board, an access network device, and an environment controller, the control board is configured to perform the method according to any one of claims 1 to 4, the access network device is configured to perform the method according to any one of claims 5 to 11, and the environment controller is configured to perform the method according to any one of claims 12 to 23.

FIG. 1

FIG. 2

| Control board | | Access network device | | Environment controller |
| --- | --- | --- | --- | --- |

301. Location information

302. Location information

303. Adjust a location based on the location information

304. State pattern

305. State pattern

306. Adjust a state based on the state pattern

FIG. 3

FIG. 4

Frame format of location adjustment request signaling

| Access network device ID | Control board ID | Target location | Target orientation | CRC character |
|---|---|---|---|---|

Location adjustment request signaling (Type 1)

| Access network device ID | Control board ID | Movement direction and movement distance | Rotation direction and rotation angle | CRC character |
|---|---|---|---|---|

Location adjustment request signaling (Type 2)

FIG. 5

Frame formats of query request signaling and query response signaling of an energy storage value and absorption efficiency

| Access network device ID | Control board ID | Query type | CRC character |
|---|---|---|---|

Query request signaling

| Access network device ID | Control board ID | Query type | Query value | CRC character |
|---|---|---|---|---|

Query response signaling

FIG. 6

Frame format of location adjustment acknowledgment signaling

| Access network device ID | Control board ID | Flag (flag) | CRC character |
|---|---|---|---|

Location adjustment acknowledgment signaling (Flag=True)

| Access network device ID | Control board ID | Flag (flag) | Current location | Current orientation | CRC character |
|---|---|---|---|---|---|

Location adjustment acknowledgment signaling (Flag=False)

FIG. 7

Incident wave →→→→→→→→ Reflected/
Transmitted wave

Absorbing and energy-
storing state (stored
energy increases)

Passive forwarding
state (stored energy
remains unchanged)

Active forwarding
state (stored energy
decreases)

FIG. 8

Frame format of state pattern request signaling

| Access network device ID | Control board ID | Start time | Time granularity | State pattern sequence | CRC character |
|---|---|---|---|---|---|

State pattern request signaling

FIG. 9

CCCAACCCAA

Control board 1

CCCSACCCSA

Control board 2

CCCCCCCSSA

Control board 3

((o))

Access
network device

Near area  Terminal
device 1

Middle area  Terminal
device 2

Far area  Terminal
device 3

Near area

| C | C | C | A | A | C | C | C | A | A |

| Energy decreases | Energy increases | Energy decreases | Energy increases |

Time

Middle area

| C | C | C | S | A | C | C | C | S | A |

| Energy decreases | Energy remains unchanged | Energy increases | Energy decreases | Energy remains unchanged | Energy increases |

Time

Far area

| C | C | C | C | C | C | C | S | S | A |

| Energy decreases | Energy remains unchanged | Energy increases |

Time

FIG. 10

Time

| | | | | |
|---|---|---|---|---|
| Terminal device 1 | | Terminal device 2 | Terminal device 2 | Terminal device 3 |
| Terminal device 1 | | Terminal device 2 | | Terminal device 3 |
| Terminal device 1 | | Terminal device 2 | Terminal device 3 | Terminal device 3 |

Frequency

Time-frequency resource allocation

RB

Slot

Time

| | | | | |
|---|---|---|---|---|
| P1 | | P2 | P2 | P3 |
| P1 | | P2 | | P3 |
| P1 | | P2 | P3 | P3 |

Frequency

Transmit power allocation

RB

Slot

Time

FIG. 11

FIG. 12

Schematic diagram of a time-domain impulse response

(a) Uncontrollable propagation environment

(b) Controllable propagation environment

FIG. 13

FIG. 14

FIG. 15

Frame format of state pattern acknowledgment signaling

| Access network device ID | Control board ID | Flag (flag) | Target orientation |
|---|---|---|---|

State pattern acknowledgment signaling

FIG. 16

Start

A control board adjusts a location based on configuration signaling

The control board performs state switching between a passive forwarding state, an active forwarding state, and an absorbing and energy-storing state based on control signaling

The control board forms a specific propagation environment to assist in wireless communication

No — Determine whether new configuration signaling is received — Yes

FIG. 17

Adjustment unit — 1802

Receiving unit — 1801

Sending unit — 1803

FIG. 18

Receiving unit — 1901

Determining unit — 1903

Sending unit — 1902

Allocation unit — 1904

FIG. 19

FIG. 20

FIG. 21

FIG. 22

K1 and K2

Passive forwarding state (P state)

Active forwarding state (A state)

K1 and K2

K1 and K2

Absorbing and energy-storing state (C state)

FIG. 23

2401

Processor

2404

2403

Transceiver

Transmitter

24031

2402

Memory

Computer program

24032

Receiver

24033

FIG. 24

2501

Input interface

2502

Logic circuit

2503

Output interface

FIG. 25

FIG. 26

**INTERNATIONAL SEARCH REPORT**

| International application No. |
| --- |
| **PCT/CN2022/127117** |

**A.   CLASSIFICATION OF SUBJECT MATTER**

H04W 4/02(2018.01)i;   H04B 7/0413(2017.01)i

According to International Patent Classification (IPC) or to both national classification and IPC

**B.   FIELDS SEARCHED**

Minimum documentation searched (classification system followed by classification symbols)

H04W H04B

Documentation searched other than minimum documentation to the extent that such documents are included in the fields searched

Electronic data base consulted during the international search (name of data base and, where practicable, search terms used)

CNTXT; ENTXTC; VEN; CJFD: 可重构, 可配置, 智能反射表面, 智能反射曲面, RIS, IRS, 位置, 幅度, 相位, 无源, 有源, 主动, 被动, intelligent reflect surface, reconfigurable reflect surface, location, position, amplitude, phase, passive, active

**C.   DOCUMENTS CONSIDERED TO BE RELEVANT**

| Category* | Citation of document, with indication, where appropriate, of the relevant passages | Relevant to claim No. |
| --- | --- | --- |
| X | WO 2021228076 A1 (VIVO MOBILE COMMUNICATION CO., LTD.) 18 November 2021 (2021-11-18) <br> description, paragraphs [0092]-[0378], and figures 1-13 | 1-4, 24, 27-30 |
| A | WO 2021228076 A1 (VIVO MOBILE COMMUNICATION CO., LTD.) 18 November 2021 (2021-11-18) <br> description, paragraphs [0092]-[0378], and figures 1-13 | 5-23, 25, 26, 31 |
| A | CN 111866726 A (ZTE CORP.) 30 October 2020 (2020-10-30) <br> entire document | 1-31 |
| A | CN 111245492 A (BEIJING UNIVERSITY OF POSTS AND TELECOMMUNICATIONS) 05 June 2020 (2020-06-05) <br> entire document | 1-31 |
| A | US 2021250143 A1 (SAMSUNG ELECTRONICS CO., LTD.) 12 August 2021 (2021-08-12) <br> entire document | 1-31 |
| A | CN 111211824 A (SOUTHEAST UNIVERSITY) 29 May 2020 (2020-05-29) <br> entire document | 1-31 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **03 January 2023** | **13 January 2023** |

| Name and mailing address of the ISA/CN | Authorized officer |
| --- | --- |
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT

Information on patent family members

International application No.

**PCT/CN2022/127117**

| Patent document cited in search report | | | Publication date (day/month/year) | Patent family member(s) | | | Publication date (day/month/year) |
|---|---|---|---|---|---|---|---|
| WO | 2021228076 | A1 | 18 November 2021 | None | | | |
| CN | 111866726 | A | 30 October 2020 | None | | | |
| CN | 111245492 | A | 05 June 2020 | None | | | |
| US | 2021250143 | A1 | 12 August 2021 | KR | 20210100981 | A | 18 August 2021 |
| CN | 111211824 | A | 29 May 2020 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111396726